# EUROPEAN PATENT SPECIFICATION

(11) **EP 1 759 836 B1**
(45) Date of publication and mention of the grant of the patent: **08.06.2011**
(21) Application number: 06017770.6
(22) Date of filing: 25.08.2006
(51) Int. Cl.: B41C 1/10, C09B 23/10

(54) **Lithographic printing plate precursor and lithographic printing method**
Lithographischer Druckplattenvorläufer und lithographische Druckmethode
Précurseur de plaque d'impression lithographique et procédé d'impression lithographique

(30) Priority: 29.08.2005 JP 2005248493; 31.01.2006 JP 2006023118
(43) Date of publication of application: 07.03.2007
(73) Proprietor: FUJIFILM Corporation, Minato-ku Tokyo (JP)
(72) Inventor: Iwai, Yu, Yoshida-cho, Haibara-gun, Shizuoka (JP); Oohashi, Hidekazu, Yoshida-cho, Haibara-gun, Shizuoka (JP); Shimada, Kazuto, Yoshida-cho, Haibara-gun, Shizuoka (JP)
(74) Representative: HOFFMANN EITLE

(56) References cited:
- EP-A- 0 784 233
- EP-A- 1 464 486
- EP-A- 1 577 113
- EP-A1- 1 396 338
- EP-A2- 1 147 884
- DE-A1- 3 704 601
- JP-A- 62 036 469
- JP-A- 62 138 855

## Description

### FIELD OF THE INVENTION

The present invention relates to a lithographic printing plate precursor and a lithographic printing method using the same. More specifically, it relates to a lithographic printing plate precursor capable of undergoing a so-called direct plate-making, which can be directly plate-made by scanning of laser having, for example, a wavelength of 300 to 1,200 nm, based on digital signals, for example, a computer, and a lithographic printing method wherein the above-described lithographic printing plate precursor is directly developed on a printing machine to conduct printing without undergoing a development processing step.

### BACKGROUND OF THE INVENTION

In general, a lithographic printing plate is composed of an oleophilic image area accepting ink in the process of printing and a hydrophilic non-image area accepting dampening water. Lithographic printing is a printing method which comprises rendering the oleophilic image area of the lithographic printing plate to an ink-receptive area and the hydrophilic non-image area thereof to a dampening water-receptive area (ink unreceptive area), thereby making a difference in adherence of ink on the surface of the lithographic printing plate, and depositing the ink only to the image area by utilizing the nature of the dampening water and oily ink to repel with each other, and then transferring the ink to a printing material, for example, paper.

In order to produce the lithographic printing plate, a lithographic printing plate precursor (PS plate) comprising a hydrophilic support having provided thereon an oleophilic photosensitive resin layer (image-recording layer) has heretofore been broadly used. Ordinarily, the lithographic printing plate is obtained by conducting plate making according to a method of exposing the lithographic printing plate precursor through an original, for example, a lith film, and then removing the image-recording layer in the non-image area by dissolving with an alkaline developer or an organic solvent thereby revealing the hydrophilic surface of support while leaving the image-recording layer in the image area.

In the hitherto known plate-making process of lithographic printing plate precursor, after exposure, the step of removing the non-image area by dissolving, for example, with a developer corresponding to the image-recording layer is required. However, it is one of the subjects to save or simplify such an additional wet treatment described above. Particularly, since disposal of liquid wastes discharged accompanying the wet treatment has become a great concern throughout the field of industry in view of the consideration for global environment in recent years, the demand for the solution of the above-described subject has been increased more and more.

As one of simple plate-making methods in response to the above-described requirement, it has been proposed a method referred to as on-machine development wherein a lithographic printing plate precursor having an image-recording layer < capable of being removed in a conventional printing process is used and after exposure, the undesirable area of the image-recording layer is removed on a printing machine to prepare a Lithographic printing plate.

Specific methods of the on-machine development include, for example, a method of using a lithographic printing plate precursor having an image-recording layer that can be dissolved or dispersed in dampening water, an ink solvent or an emulsion of dampening water and ink, a method of mechanically removing an image-recording layer by contact with rollers or a blanket cylinder of a printing machine, and a method of lowering cohesion of an image-recording layer or adhesion between an image-recording layer and a support upon penetration of dampening water, ink solvent or the like and then mechanically removing the image-recording layer by contact with rollers or a blanket cylinder of a printing machine.

In the invention, unless otherwise indicated particularly, the term "development processing step" means a step of using an apparatus (ordinarily, an automatic developing machine) other than a printing machine and removing an infrared laser-unexposed area in the lithographic printing plate precursor upon contact with liquid (ordinarily, an alkaline developer) thereby revealing a hydrophilic surface of support. The term "on-machine development" means a method and a step of removing an infrared laser-unexposed area in the lithographic printing plate precursor upon contact with liquid (ordinarily, printing ink and/or dampening water) by using a printing machine thereby revealing a hydrophilic surface of support.

On the other hand, digitalized technique of electronically processing, accumulating and outputting image information using a computer has been popularized in recent years, and various new image outputting systems responding to the digitalized technique have been put into practical use. Correspondingly, attention has been drawn to a computer-to-plate (CTP) technique of carrying digitalized image information on highly converging radiation, for example, laser light and conducting scanning exposure of a lithographic printing plate precursor with the light thereby directly preparing a lithographic printing plate without using a lith film. Thus, it is one of important technical subjects to obtain a lithographic printing plate precursor adaptable to the technique described above.

As described above, in recent years, the simplification of plate-making operation and the realization of dry system and non-processing system have been further strongly required from both aspects of the consideration for global environment and the adaptation for digitization.

In general, an operation for inspection and discrimination of image formed on a printing plate is carried out in order to examine whether the image is recorded on the printing plate as intended, in advance of mounting the printing plate on a printing machine. In a conventional lithographic printing plate precursor subjected to the development processing step, it is ordinarily easily performed to confirm the image formed after the plate-making (after the development processing) and before the printing (before the mounting the printing plate on a printing machine) by means of coloration of the image-recording layer.

However, with respect to the lithographic printing plate precursor of the on-machine development type or non-processing (non-development) type without accompanying the development processing prior to printing, the image is not recognized on the printing plate in the step of mounting it on a printing machine, and thus the discrimination of the printing plate can not be performed. In particular, it is important in the printing operation to determine whether a registry guide (register mark) which acts as a landmark for the registering in multicolor printing is recorded. Therefore, in the lithographic printing plate precursor of the on-machine development type or non-processing (non-development) type, a means for confirming the image (print-out agent) at the stage of exposure or heating is required.

Printing plates have been proposed wherein a compound capable of generating an acid, base or radical by means of light or heat and a compound capable of undergoing color change upon interaction with the acid, base or radical generated are used as the print-out agent (for example, see JP-A-11-277927 (the term "JP-A" as used herein means an "unexamined published Japanese patent application")). Also, it has been proposed to utilize color change of thermally decomposable compound as the print-out agent of a direct-drawing type lithographic printing plate precursor having a heat-sensitive layer (for example, see JP-A-2000-335129). Further, it has been proposed to use a thermally decomposable dye having a decomposable temperature of 250°C or below as the print-out agent (for example, see JP-A-2000-335129).

According to these proposals, the color formation or decoloration occurs in the exposed area and the image-confirmation property increases to some extent. However, there are problems in that the dye formed or the dye which has not been decomposed or decolored by the exposure colors dampening water to adversely affect finish of printed materials, in that insoluble dyes remain in ink and dampening water or the dyes reacts with components of ink and dampening water to precipitate, resulting in the formation of scum, and the like.

EP 1 464 486 A2 relates to a presensitized plate comprising a support and an image-recording layer, wherein the image recording layer contains an IR absorbing cyanine dye, a radical generator and a radical polymerizable compound.

EP 1 147 884 A2 concerns a printing plate precursor including a photosensitive layer obtainable by coating and drying a photosensitive composition which comprises a polymer and a cyanine dye.

EP 1 396 338 A1 describes a heat-sensitive lithographic printing plate precursor comprising a hydrophilic support and a coating, wherein the coating contains an IR absorbing cyanine dye comprising a bridged methane chain and anionic groups.

EP 1 577 113 A relates to a curable composition containing a cyanine dye, a radical generator and/or an acid generator, and a radical polymerizable compound and/or an acid crosslinking agent.

EP 0 784 233 A describes a photosensitive composition for a lithographic printing plate, comprising a novolak resin or polyvinylphenol resin, an amino compound derivative capable of curing the resin and a polymethine compound, which may be a cyanine dye.

DE 37 04 601 A1 discloses an optical storage medium comprising a recording layer on a support, wherein the recording layer contains a cyanine dye.

JP 62 036469 A describes a cyanine dyes with a bridged polymethine chain, which may be used for optical recording media.

JP 62 138855 A describes a photosensitive layer containing a cyanine dye with a bridged polymethine chain.

### SUMMARY OF THE INVENTION

An object of the present invention is to provide a lithographic printing plate precursor of the on-machine development type capable of forming a color image having good visibility by laser exposure, in which an image-recording layer can be coated in high concentration without unevenness, with which the formation of scum resulting from the components in the image-recording layer at the on-machine development and the coloration of dampening water are prevented, and which is excellent in the on-machine development property, and a lithographic printing method using the lithographic printing plate precursor.

As a result of various investigations to achieve the above-described object, the inventors have found that an image-recording layer can be coated in high concentration without unevenness and a print-out image having good visibility can be obtained by using a specific infrared absorbing agent including at least one solvent-soluble group in its molecule together with a radical initiator to complete the invention.

Specifically, the present invention includes the following items.
(1) A lithographic printing plate precursor comprising a support and an image-recording layer which contains (A) a cyanine dye of formula (I) as defined below including a solvent-soluble group and having an absorption maximum in an infrared wavelength region, (B) a polymerization initiator as defined below, (C) a polymerizable compound and (D) a binder polymer, and which is capable of being removed with printing ink and/or an aqueous component, wherein the solvent-soluble group included in the cyanine dye (A) is a member selected from the group consisting of an alkyloxy group, an aryloxy group, an ether group, an alkyloxycarbonyl group and an aryloxycarbonyl group.
(2) The lithographic printing plate precursor as described in (1), wherein the solvent-soluble group is an ether group or an alkyloxycarbonyl group.
(3) The lithographic printing plate precursor as described in (1), wherein the cyanine dye (A) including a solvent-soluble group and having an absorption maximum in an infrared wavelength region is a compound including a salt structure comprising a cation and an anion and the anion is an inorganic anion.
(4) The lithographic printing plate precursor as described in any one of (1) to (3), wherein the inorganic anion of the cyanine dye (A) including a solvent-soluble group and having an absorption maximum in an infrared wavelength region is PF₆⁻.
(5) The lithographic printing plate precursor as described in any one of (1) to (4), wherein the polymerization initiator (B) is a diaryl iodonium salt including alkoxy groups as electron donating groups.
(6) The lithographic printing plate precursor as described in any one of (1) to (5), wherein the counter anion of the polymerization initiator (B) is C₄F₉SO₃⁻.
(7) The lithographic printing plate precursor as described in any one of (1) to (6),
(8) A lithographic printing method comprising a step of exposing imagewise the lithographic printing plate precursor as described in any one of (1) to (7) with an infrared laser and a printing step by supplying oily ink and an aqueous component to perform printing without carrying out any development processing of the lithographic printing plate precursor after the exposure, wherein the unexposed area with the infrared laser of the lithographic printing plate precursor is removed in the course of the printing step.

According to the present invention, a lithographic printing plate precursor of the on-machine development type capable of forming a color image having good visibility by laser exposure, in which an image-recording layer can be coated in high concentration without unevenness, with which the formation of scum resulting from the components in the image-recording layer at the on-machine development and the coloration of dampening water are prevented, and which is excellent in the on-machine development property can be provided.

Also, according to the invention, a lithographic printing method can be provided in which a color image having good visibility can be formed by laser exposure and in which the formation of scum resulting from the components in the image-recording layer at the on-machine development and the coloration of dampening water are prevented by using the lithographic printing plate precursor according to the invention.

### DETATLED DESCRIPTION OF THE INVENTION

The invention will be described in more detail below.

### [Lithographic Printing Plate Precursor]

The lithographic printing plate precursor according to the invention is characterized by containing (A) a cyanine dye including a solvent-soluble group and having an absorption maximum in an infrared wavelength region in the image-recording layer thereof, and further contains (B) a polymerization initiator, (C) a polymerizable compound and (D) a binder polymer in the image-recording layer. The image-recording layer is an image-recording layer capable of undergoing a so-called on-machine development, which can be recorded with infrared ray irradiation and after the recording of image by the infrared ray exposure, is subjected to a printing procedure without undergoing any wet development processing step to conduct printing, whereby the non-image area thereof is removed with an oily component/aqueous component, for example, ink and dampening water, in the course of printing.

Each of the constituting components of the image-recording layer according to the invention will be described in greater detail below.

### <(A) Cyanine dye including a solvent-soluble group and having an absorption maximum in an infrared wavelength region>

The image-recording layer of the lithographic printing plate precursor according to the invention is necessary to contain a cyanine dye (A) including a solvent-soluble group and having an absorption maximum in an infrared wavelength region, i.e., wavelength of from 760 to 1,200 nm (hereinafter, also referred to as a specific cyanine dye (A), appropriately). Since the specific cyanine dye (A) has a function as an infrared absorbing agent, the lithographic printing plate precursor according to the invention can perform image formation using a laser emitting an infrared ray of 760 to 1,200 nm as a light source. The term "infrared absorbing agent" as used in the invention means a compound having a function of converting an infrared ray absorbed to heat and a function of being excited with the infrared ray and conducting electron transfer/energy transfer to a polymerization initiator (radical generator) described hereinafter. In the image-recording layer according to the invention, other infrared absorbing agent, specifically, a dye or pigment having an absorption maximum at a wavelength of 760 to 1,200 nm can be used together with the specific cyanine dye (A) described above.

The specific cyanine dye (A) is characterized by including at least one solvent-soluble group in the skeleton of the cyanine dye. The solvent-soluble group for use in the specific cyanine dye according to the invention is an organic functional group capable of increasing solvent-solubility of the cyanine dye, and is selected from an alkyloxy group, an aryloxy group, an ether group, an alkyloxycarbonyl group, and an aryloxycarbonyl group. An ether group is the most preferable solvent-soluble group according to the invention.

The cyanine dye (A) is represented by formula (i) described below and includes at least one solvent-soluble group in its molecule. The solvent-soluble group is attached to R³ and/or R⁴. Although a number of the solvent-soluble groups introduced is at least one, it is preferable that 2 to 6 solvent-soluble groups are introduced into one molecule of the cyanine dye from the standpoint that the image-recording layer can be coated in high concentration without unevenness, the formation of scum resulting from the components in the image-recording layer at the on-machine development is prevented, and the on-machine development property is improved. Examples of the Ph group (aromatic ring) in formula (i) are benzene ring, condensed ring made from two or three benzene rings, condensed ring made from benzene ring and 5-membered unsaturated ring, and the like. More specifically, phenyl group, naphthyl group, anthryl group, phenanthry group, indenyl group, fluorenyl group are more preferable examples of the Ph (aromatic ring), and phenyl group is particularly preferable.

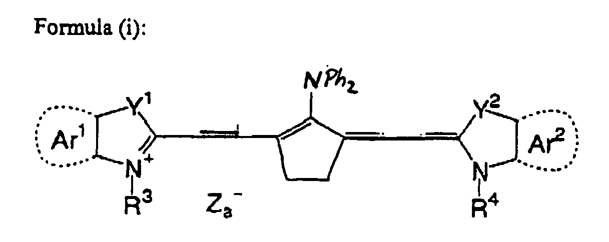

Ar¹ and Ar², which may be the same or different, each represents an aromatic hydrocarbon group which may have a substituent. Preferred examples of the aromatic hydrocarbon group include a benzene ring and a naphthalene ring. Also, preferred examples of the substituent include a hydrocarbon group having 12 or less carbon atoms, a halogen atom and an alkoxy group having 12 or less carbon atoms. From the standpoint of improvement in the visibility, the substituent is preferably an electron donating group, and specifically, it is more preferably an alkoxy group having 12 or less carbon atoms or an alkyl group having 12 or less carbon atoms. Y¹ and Y², which may be the same or different, each represents a dialkylmethylene group having 12 or less carbon atoms. R³ and R⁴, which may be the same or different, each represents a hydrocarbon group having 20 or less carbon atoms which may have a substituent, further to the solvent-soluble group. Preferred examples of the substituent include an alkoxy group having 12 or less carbon atoms, a carboxy group and a sulfo group. Za⁻ represents a counter anion. However, Za' is not necessary when the cyanine dye represented by formula (i) has an anionic substituent in the structure thereof so that neutralization of the charge is not needed. If present, the counter ion for Za⁻ is a halogen ion, a tetrafluoroborate ion, a hexafluorophosphate ion or a sulfonate ion, and a particularly preferred example thereof is a hexafluorophosphate ion in view of preservation stability of a coating solution for image-recording layer. Further, from the standpoint of improvement in the visibility, Za⁻ is preferably an inorganic anion or a counter anion of a strong acid and specifically includes PF₆⁻, BF₄⁻, CF₃SO₃- and C₄F₉SO₃⁻ and among them, PF₆⁻ is most preferable.

Specific examples of the specific cyanine dye (A) which can be preferably used in the invention include Compounds (IR-1) to (IR-32) set forth below; but the invention should not be construed as being limited thereto.

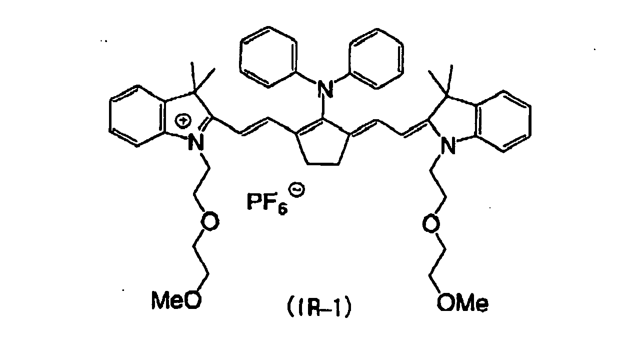

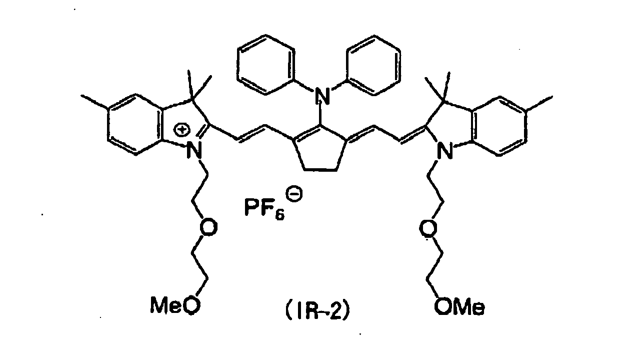

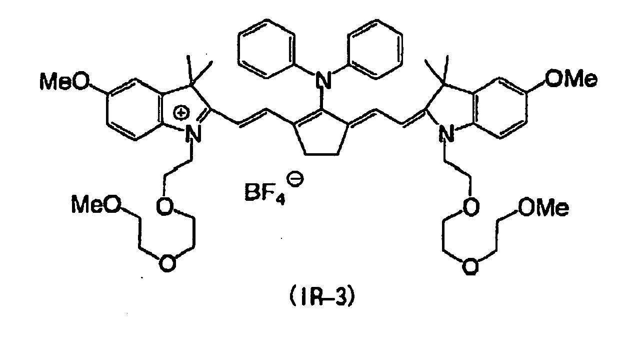

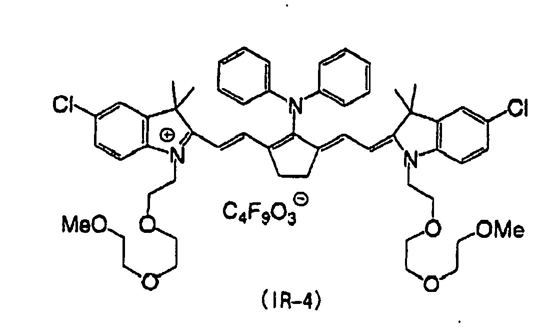

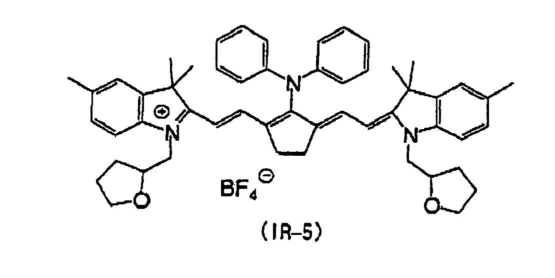

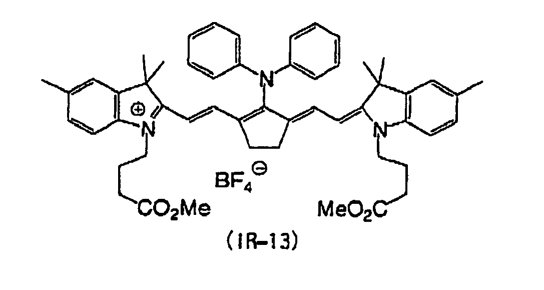

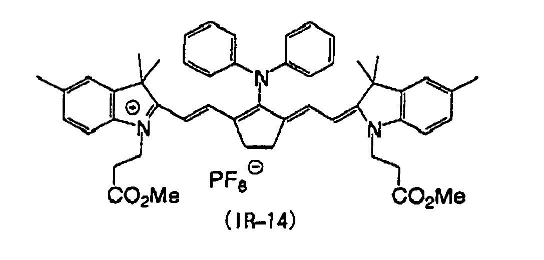

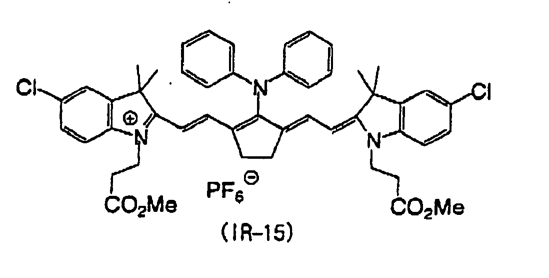

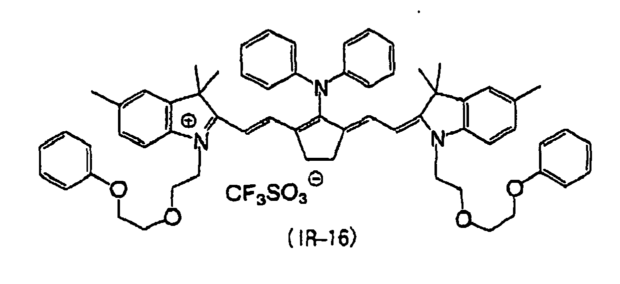

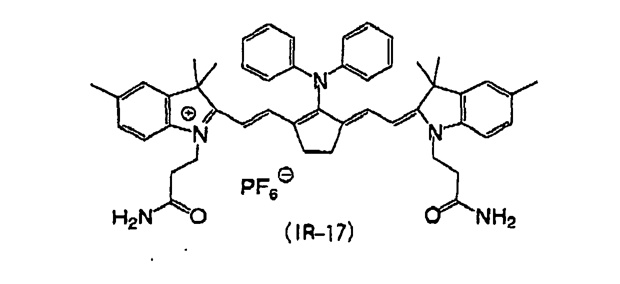

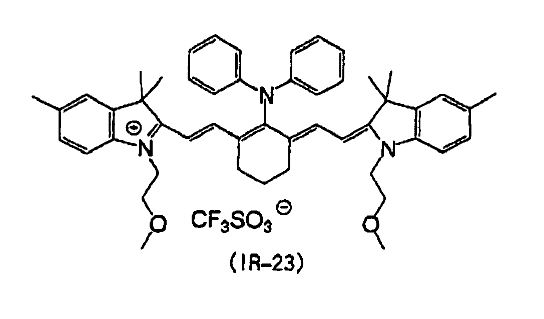

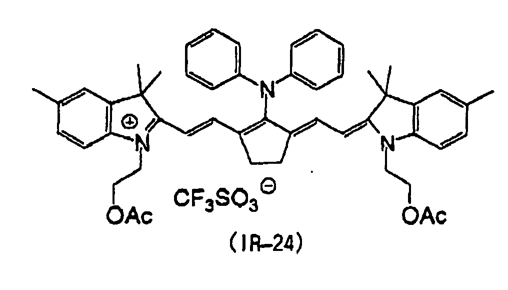

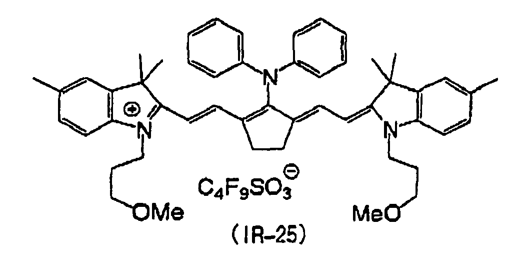

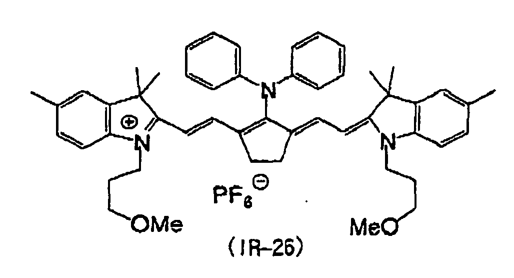

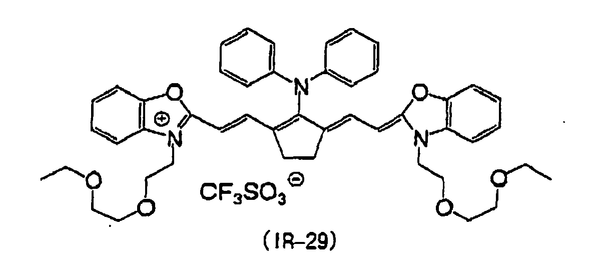

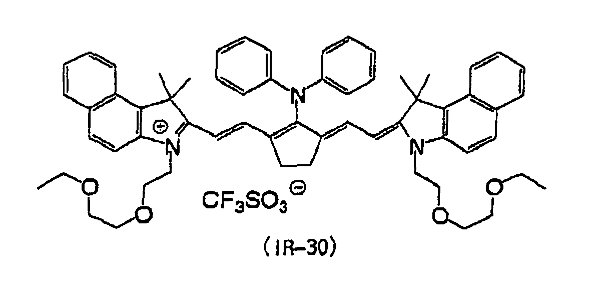

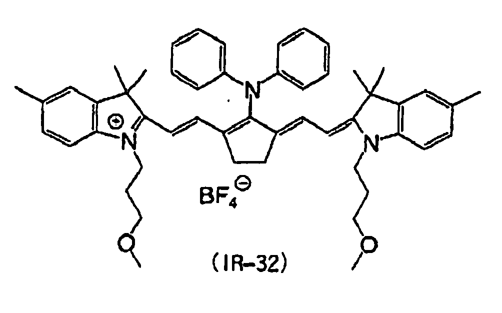

The specific cyanine dye (A) may be added together with other components to one layer or may be added to a different layer separately provided. With respect to an amount of the specific cyanine dye added, in the case of preparing a negative-working lithographic printing plate precursor, the amount is so controlled that absorbance of the image-recording layer at the maximum absorption wavelength in the wavelength region of from 760 to 1,200 nm measured by a reflection measurement method is ordinarily in a range from 0.3 to 1.2, preferably in a range from 0.4 to 1.1. In the above-described range, the polymerization reaction proceeds uniformly in the thickness direction of the image-recording layer and good film strength of the image area and good adhesion of the image area to a support are achieved.

The absorbance of the image-recording layer can be controlled depending on the amount of the infrared absorbing agent added to the image-recording layer and the thickness of the image-recording layer. The measurement of the absorbance can be carried out in a conventional manner. The method for measurement includes, for example, a method of forming an image-recording layer having a thickness as a coating amount after drying determined appropriately in the range necessary for the lithographic printing plate precursor on a reflective support, for example, an aluminum plate, and measuring reflection density of the image-recording layer by an optical densitometer or a spectrophotometer according to a reflection method using an integrating sphere.

The amount of the specific cyanine dye (A) added to the image-recording layer is preferably from 0.1 to 30% by weight, more preferably from 0.5 to 20% by weight, still more preferably from 1 to 10% by weight, based on the total solid content of the image-recording layer.

In the image-recording layer according to the invention, other infrared absorbing agent can be used together with the specific cyanine dye (A) to the extent that the effect of the invention is not impaired. Examples of the other inferred absorbing agent include known infrared absorbing dyes and infrared absorbing pigments.

As the infrared absorbing dyes, known dyes described in literature, for example, Senryo Binran (Dye Handbook) compiled by The Society of Synthetic Organic Chemistry, Japan (1970) arc exemplified. Specifically, the dyes include azo dyes, metal complex azo dyes, pyrazolone azo dyes, naphthoquinone dyes, anthraquinone dyes, phthalocyanine dyes, carbonium dyes, quinoneimine dyes, methine dyes, cyanine dyes, squarylium dyes, pyrylium salts and metal thiolate complexes.

Preferred examples of the dye include cyanine dyes described, for example, in JP-A-58-125246, JP-A-59-84356 and JP-A-60-78787; methine dyes described, for example, in JP-A-58-173696, JP-A-58-181690 and JP-A-58-194595; naphthoquinone dyes described, for example, in JP-A-58-112793, JP-A-58-224793, JP-A-59-48187, JP-A-59-73996, JP-A-60-52940 and JP-A-60-63744; squarylium dyes described, for example, in JP-A-58-112792; and cyanine dyes described, for example, in British Patent 434,875.

Also, near infrared absorbing sensitizers described in U.S. Patent 5,156,938 are preferably used. Further, substituted arylbenzo(thio)pyrylium salts described in U.S. Patent 3,881,924, trimethinethiapyrylium salts described in JP-A-57-142645 (corresponding to U.S. Patent 4,327,169), pyrylium compounds described in JP-A-58-181051, JP-A-58-220143, JP-A-59-41363, JP-A-59-84248, JP-A-59-84249, JP-A-59-146063 and JP-A-59-146061, cyanine dyes described in JP-A-59-216146, pentamethinethiopyrylium salts described in U.S. Patent 4,283,475, and pyrylium comounds described in JP-B-5-13514 and JP-B-3-19702 (the term "JP-B" as used herein means an "examined Japanese patent publication") are also preferably used. Other preferred examples of the dye include near infrared absorbing dyes represented by formulae (I) and (II) in U.S. Patent 4,756,993.

Other preferred examples of the infrared absorbing dye according to the invention include specific indolenine cyanine dyes described in Japanese Patent Application Nos. 2001-6362 and 2001-237840 (JP-A-2002-278057) as illustrated below.

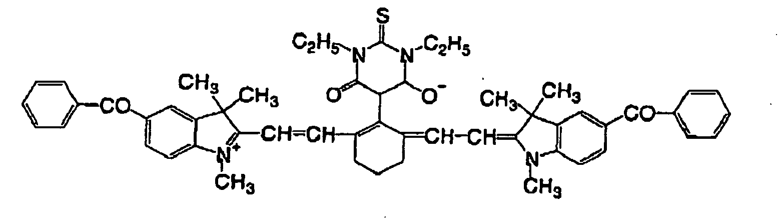

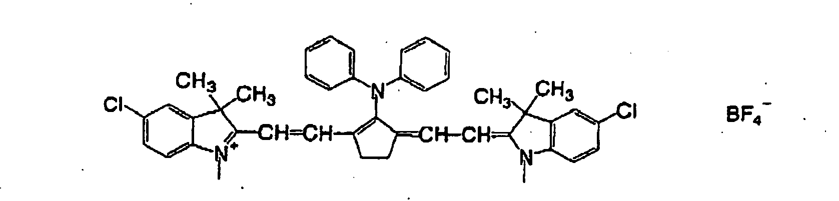

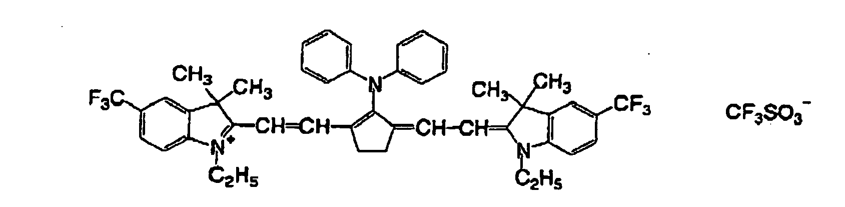

Of the dyes, cyanine dyes, squarylium dyes, pyrylium dyes, nickel thiolate complexes and indolenine cyanine dyes are particularly preferred. Cyanine dyes and indolenine cyanine dyes are more preferred. As one particularly preferred example of the dye, a cyanine dye represented by formula (i) shown below but not including the solvent-soluble group in its structure is exemplified.

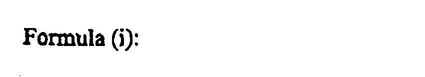

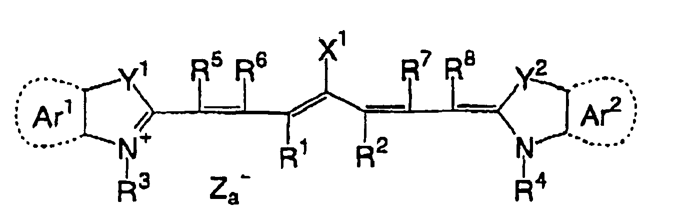

In formula (i), X¹ represents a hydrogen atom, a halogen atom, -NPh₂, X²-L¹ or a group shown below, X² represents an oxygen atom, a nitrogen atom or a sulfur atom, and L¹ represents a hydrocarbon group having from 1 to 12 carbon atoms, an aromatic ring containing a hetero atom or a hydrocarbon group having from 1 to 12 carbon atoms and including a hetero atom. The hetero atom indicates a nitrogen atom, a sulfur atom, an oxygen atom, a halogen atom or a selenium atom. 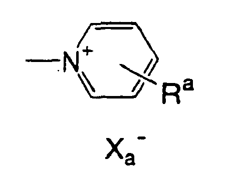 wherein Xa⁻ has the same meaning as Za⁻ defined hereinafter, and R^{a} represents a hydrogen atom, an alkyl group, an aryl group, a substituted or unsubstituted amino group or a halogen atom. From the standpoint of improvement in the visibility, X¹ is preferably -NPh₂.

R¹ and R² each independently represents a hydrocarbon group having from 1 to 12 carbon atoms. In view of the preservation stability of a coating solution for image-recording layer, it is preferred that R¹ and R² each represents a hydrocarbon group having two or more carbon atoms, and particularly preferably, R¹ and R² are combined with each other to form a 5-membered or 6-membered ring. From the standpoint of improvement in the visibility, it is most preferable that R¹ and R² are combined with each other to form a 5-membered ring.

Ar¹ and Ar², which may be the same or different, each represents an aromatic hydrocarbon group which may have a substituent. Preferred examples of the aromatic hydrocarbon group include a benzene ring and a naphthalene ring. Also, preferred examples of the substituent include a hydrocarbon group having 12 or less carbon atoms, a halogen atom and an alkoxy group having 12 or less carbon atoms. From the standpoint of improvement in the visibility, the substituent is preferably an electron donating group, and specifically, it is more preferably an alkoxy group having 12 or less carbon atoms or an alkyl group having 12 or less carbon atoms. Y¹ and Y², which may be the same or different, each represents a sulfur atom or a dialkylmethylene group having 12 or less carbon atoms. R³ and R⁴, which may be the same or different, each represents a hydrocarbon group having 20 or less carbon atoms, which may have a substituent. Preferred examples of the substituent include an alkoxy group having 12 or less carbon atoms, a carboxy group and a sulfo group. R⁵, R⁶, R⁷ and R⁸, which may be the same or different, each represents a hydrogen atom or a hydrocarbon group having 12 or less carbon atoms. From the standpoint of the availability of raw materials, a hydrogen atom is preferred. Za⁻ represents a counter anion. However, Za⁻ is not necessary when the cyanine dye represented by formula (i) has an anionic substituent in the structure thereof so that neutralization of the charge is not needed. Preferred examples of the counter ion for Za⁻ include a halogen ion, a perchlorate ion, a tetrafluoroborate ion, a hexafluorophosphate ion and a sulfonate ion, and particularly preferred examples thereof include a perchlorate ion, a hexafluorophosphate ion and an arylsulfonate ion in view of preservation stability of a coating solution for image-recording layer. Further, from the standpoint of improvement in the visibility, Za⁻ is preferably an inorganic anion or a counter anion of a strong acid and specifically includes PF₆⁻, BF₄⁻, CF₃SO₃- and C₄F₉SO3⁻ and among them, PF₆⁻ is most preferable.

Specific examples of the cyanine dye represented by formula (i) but not including the solvent-soluble group, which can be preferably used in the invention, include those described in paragraphs [0017] to [0019] of JP-A-2001-133969.

Further, other particularly preferred examples include specific indolenine cyanine dyes described in Japanese Patent Application Nos. 2001-6362 and 2001-237840 (JP-A-2002-278057) described above.

Examples of the infrared absorbing pigment used in the invention include commercially available pigments and pigments described in Colour Index (C.I.), Saishin Ganrvo Binran (handbook of Newest Pigments) compiled by Pigment Technology Society of Japan (1977), Saishin Garnyo Oyou Gijutsu (Newest Application Technologies of Pigments), CMC Publishing Co., Ltd. (1986) and Insatsu Ink Gijutsu (Printing Ink Technology), CMC Publishing Co., Ltd. (1984).

Examples of the pigment include black pigments, yellow pigments, orange pigments, brown pigments, red pigments, purple pigment, blue pigments, green pigments, fluorescent pigments, metal powder pigments and polymer-bonded dyes. Specific examples of usable pigments include insoluble azo pigments, azo lake pigments, condensed azo pigments, chelated azo pigments, phthalocyanine pigments, anthraquinone pigments, perylene and perynone pigments, thioindigo pigments, quinacridone pigments, dioxazine pigments, isoindolinone pigments, quinophthalone pigments, dying lake pigments, azine pigments; nitroso pigments, nitro pigments, natural pigments, fluorescent pigments, inorganic pigments and carbon black. Of the pigments, carbon black is preferred.

The pigment may be used without undergoing surface treatment or may be used after the surface treatment. For the surface treatment, a method of coating a resin or wax on the surface, a method of attaching a surfactant and a method of bonding a reactive substance (for example, a silane coupling agent, an epoxy compound or polyisocyanate) to the pigment surface. The surface treatment methods are described in Kinzoku Sekken no Seishitsu to Oyo (Properties and Applications of Metal Soap), Saiwai Shobo, Insatsu Ink Gijutsu (Printing Ink Technology), CMC Publishing Co., Ltd. (1984), and Saishin Ganryo Oyo Gijutsu (Newest Application Technologies of Pigments), CMC Publishing Co., Ltd. (1986).

The pigment has a particle size of preferably from 0.01 to 10 µm, more preferably from 0.05 to 1 µm, particularly preferably from 0.1 to 1 µm. In the above-described range, good stability of the pigment dispersion in a coating solution for image-recording layer and good uniformity of the image-recording layer can be achieved.

For dispersing the pigment, a known dispersion technique for use in the production of ink or toner may be used. Examples of the dispersing machine include an ultrasonic dispersing machine, a sand mill, an attritor, a pearl mill, a super-mill, a ball mill, an impeller, a disperser, a KD mill, a colloid mill, a dynatron, a three roll mill and a pressure kneader. The dispersing machines are described in detail in Saishin Ganryo Ovo Gijutsu (Newest Application Technologies of Pigments), CMC Publishing Co., Ltd. (1986).

The other infrared absorbing agent may be added together with the specific cyanine dye (A) and other components to one layer or may be added to a different layer separately provided. With respect to an amount of the whole infrared absorbing agent including the specific cyanine dye (A) added, in the case of preparing an image-recording layer, the amount is so controlled that absorbance of the image-recording layer at the maximum absorption wavelength in the wavelength region of from 760 to 1,200 nm measured by a reflection measurement method is ordinarily in a range from 0.3 to 1.2, preferably in a range from 0.4 to 1.1. In the above-described range, the polymerization reaction proceeds uniformly in the thickness direction of the image-recording layer and good film strength of the image area and good adhesion of the image area to a support are achieved.

The absorbance of the image-recording layer can be controlled depending on the amount of the infrared absorbing agent added to the image-recording layer and the thickness of the image-recording layer. The measurement of the absorbance can be carried out in a conventional manner. The method for measurement includes, for example, a method of forming a image-recording layer having a thickness as a coating amount after drying determined appropriately in the range necessary for the lithographic printing plate precursor on a reflective support, for example, an aluminum plate, and measuring reflection density of the image-recording layer by an optical densitometer or a spectrophotometer according to a reflection method using an integrating sphere.

The amount of the whole infrared absorbing agent added to the image-recording layer is preferably from 0.1 to 30% by weight, more preferably from 0.5 to 20% by weight, still more preferably from 1 to 10% by weight, based on the total solid content of the image-recording layer. In the above-described range of the amount added, both excellent exposure sensitivity and uniformity and strength of the layer can be achieved. The content of the other infrared absorbing agent used together is preferably in a range from 0 to 100% by mole to the specific cyanine dye (A).

The image-recording layer according to the invention contains (B) a polymerization initiator, (C) a polymerizable compound and (D) a binder polymer in addition to the specific cyanine dye (A) and other infrared absorbing agent usable together described above.

### <(B) Polymerization initiator>

The polymerization initiator for use in the invention is a compound that generates a radical with light energy, heat energy or both energies to initiate or accelerate polymerization of a compound having a polymerizable unsaturated group. The polymerization initiator for use in the invention is a diaryl iodonium salt including two or more electron donating groups.

Iodonium salts are described in European Patent 104,143, U.S. Patents 339,049 and 410,201, JP-A-2-150848 and JP-A-2-296514.

In the invention, the iodonium salt functions not as an acid generator, but as an ionic radical polymerization initiator.

The iodonium salts preferably used in the invention include onium salts represented by the following formula (RI-II):

Ar²¹-I⁺-Ar²² Z²¹⁻ (RI-II)

In the formula (RI-II), Ar²¹ and Ar²² each independently represents an aryl group having 20 or less carbon atoms, which may have 1 to 6 substituents. Preferred example of the substituent includes an alkyl group having from 1 to 12 carbon atoms, an alkenyl group having from 1 to 12 carbon atoms, an alkynyl group having from 1 to 12 carbon atoms, an aryl group having from 1 to 12 carbon atoms, an alkoxy group having from 1 to 12 carbon atoms, an aryloxy group having from 1 to 12 carbon atoms, a halogen atom, an alkylamino group having from 1 to 12 carbon atoms, a dialkylimino group having from 1 to 12 carbon atoms, an alkylamido group or arylamido group having from 1 to 12 carbon atoms, a carbonyl group, a carboxy group, a cyano group, a sulfonyl group, an thioalkyl group having from 1 to 12 carbon atoms and an thioaryl group having from 1 to 12 carbon atoms. Z²¹⁻ represents a monovalent anion. Specific examples of the monovalent anion include a halogen ion, a perchlorate ion, a hexafluorophosphate ion, a tetrafluoroborate ion, a sulfonate ion, a sulfinate ion, a thosulfonate ion, a sulfate ion and a carboxylate ion. Among them, a perchlorate ion, a hexafluorophosphate ion, a tetrafluoroborate ion, a sulfonate ion, a sulfinate ion and a carboxylate ion are preferred in view of stability and reactivity.

Specific examples of the iodonium salt compound that is preferably used as the polymerization initiator in the invention are set forth below, but the invention should not be construed as being limited thereto.

PF₆⁻ (I-2)

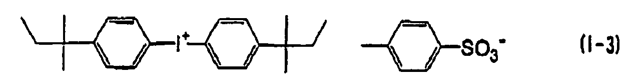

ClO₄ (I-4)

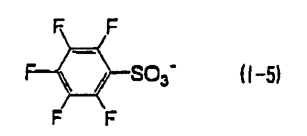

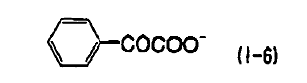

CF₃SO₃⁻ (I-7)

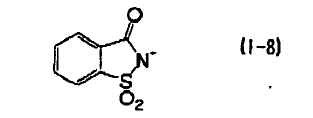

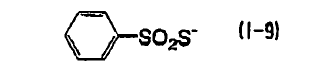

PF₆⁻ (I-10)

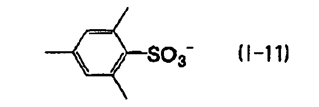

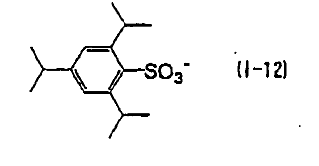

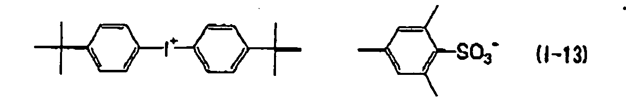

ClO₄⁻ (I-14)

PF₆⁻ (I-15)

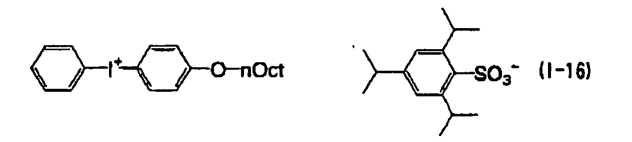

CF₃COO⁻ (I-17)

CF₃SO₃⁻ (I-18)

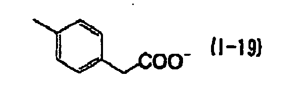

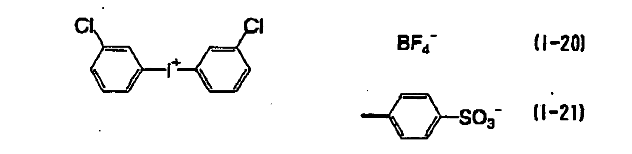

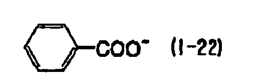

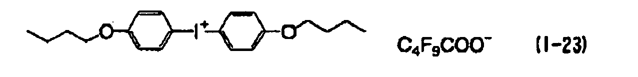

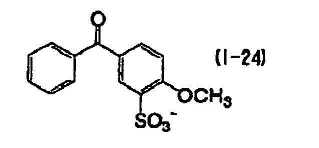

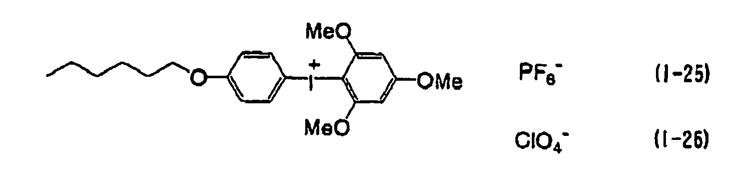

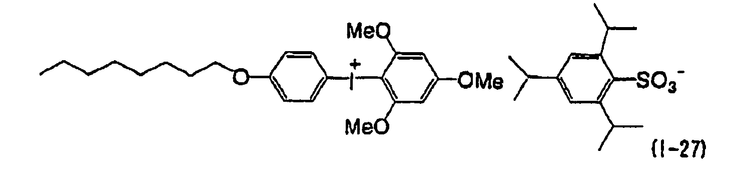

PF₈ (I-28)

C₄F₈SO₃ (I-29)

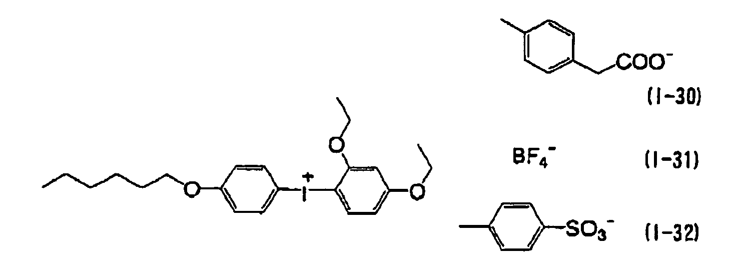

PF₆⁻ (I-33)

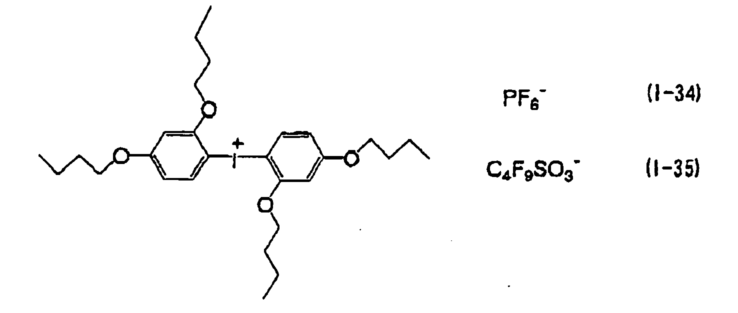

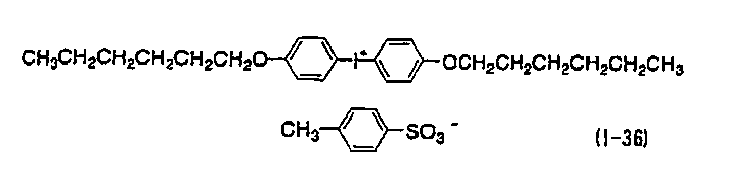

Of (B) the polymerization initiators, iodonium salt compounds including as a counter ion, an inorganic anion, for example, PF₆⁻, BF₄ or C₄F₉SO₃⁻ are preferable from the standpoint of the improvement in visibility. Further, in view of being excellent in the color-forming property, the diaryl iodonium salts include two or more electron donating groups. These polymerization initiators are compounds having a diaryl iodonium skeleton and have two or more, preferably three or more electron donating groups, for example, an alkyl group or an alkoxy group. It is preferred that the electron donating groups are introduced into the para positions and ortho positions of the aryl groups of the iodonium salt.

By using such a polymerization initiator (B) excellent in the color-forming property, coupled with the effect of the specific cyanine dye (A), more improvement in the visibility can be achieved.

The polymerization initiator (B) can be added preferably in an amount from 0.1 to 50% by weight, more preferably from 0.5 to 30% by weight, particularly preferably from 1 to 20% by weight, based on the total solid content of the image-recording layer. In the above-described range, favorable sensitivity and good stain resistance in the non-image area at the time of printing are achieved. The polymerization initiators may be used individually or in combination of two or more thereof. Further, the polymerization initiator may be added together with other components to one layer or may be added to a different layer separately provided.

### <(C) Polymerizable compound>

It is preferred that the image-recording layer according to the invention contains a polymerizable compound in order to perform an effective hardening reaction. The Polymerizable compound which can be used in the invention is an addition-polymerizable compound having at least one ethylenically unsaturated double bond and it is selected from compounds having at least one, preferably two or more, terminal ethylenically unsaturated double bonds. Such compounds are widely known in the field of art and they can be used in the invention without any particular limitation. The compound has a chemical form, for example, a monomer, a prepolymer, specifically, a dimer, a trimer or an oligomer, or a copolymer thereof, or a mixture thereof. Examples of the monomer and copolymer thereof include unsaturated carboxylic acids (for example, acrylic acid, methacrylic acid, itaconic acid, crotonic acid, isocrotonic acid or maleic acid) and esters or amides thereof Preferably, esters of an unsaturated carboxylic acid with an aliphatic polyhydric alcohol compound and amides of an unsaturated carboxylic acid with an aliphatic polyvalent amine compound are used. An addition reaction product of an unsaturated carboxylic acid ester or amide having a nucleophilic substituent, for example, a hydroxy group, an amino group or a mercapto group, with a monofunctional or polyfunctional isocyanate or epoxy, or a dehydration condensation reaction product of the unsaturated carboxylic acid ester or amide with a monofunctional or polyfunctional carboxylic acid is also preferably used. Furthermore, an addition reaction product of an unsaturated carboxylic acid ester or amide having an electrophilic substituent, for example, an isocyanato group or an epoxy group with a monofunctional or polyfunctional alcohol, amine or thiol, or a substitution reaction product of an unsaturated carboxylic acid ester or amide having a releasable substituent, for example, a halogen atom or a tosyloxy group with a monofunctional or polyfunctional alcohol, amine or thiol is also preferably used. In addition, compounds in which the unsaturated carboxylic acid described above is replaced by an unsaturated phosphonic acid, styrene, vinyl ether or the like can also be used.

Specif examples of the monomer, which is an ester of an aliphatic polyhydric alcohol compound with an unsaturated carboxylic acid, include acrylic acid esters, for example, ethylene glycol diacrylate, triethylene glycol diacrylate, 1,3-butanediol diacrylate, tetramethylene glycol diacrylate, propylene glycol diacrylate, neopentyl glycol diacrylate, trimethylolpropane triacrylate, trimethylolpropane tri(acryloyloxypropyl) ether, trimethylolethane triacrylate, hexanediol diacrylate, 1,4-cyclohexanediol diacrylate, tetraethylene glycol diacrylate, pentaerythritol diacrylate, pentaerythritol triacrylate, pentaerythritol tetraacrylate, dipentaerythritol diacrylate, dipentaerythritol hexaacrylate, sorbitol triacrylate, sorbitol tetraacrylate, sorbitol pentaacrylate, sorbitol hexaacrylate, tri(acryloyloxyethyl) isocyanurate, polyester acrylate oligomer or isocyanuric acid EO modified triacrylate; methacrylic acid esters, for example, tetramethylene glycol dimethacrylate, triethylene glycol dimethacrylate, neopentyl glycol dimethacrylate, trimethylolpropane trimethacrylate, trimethylolethane trimethacrylate, ethylene glycol dimethacrylate, 1,3-butanediol dimethacrylate, hexanediol dimethacrylate, pentaerythritol dimethacrylate, pentaerythritol trimethacrylate, pentaerythritol tetramethacrylate, dipentaerythritol dimethacrylate, dipentaerythritol hexamethacrylate, sorbitol trimethacrylate, sorbitol tetramethacrylate, bis[p-(3-methacrylaxy-2-hydroxypropoxy)phenyl]dimethylmethane or bis[p-(methacryloxyethoxy)phenyl]dimethylmethane; itaconic acid esters, for example, ethylene glycol diitaconate, propylene glycol diitaconate, 1,3-butanediol diitaconate, 1,4-butanediol diitaconate, tetramethylene glycol diitaconate, pentaerythritol diitaconate or sorbitol tetraitaconate; crotonic acid esters, for example, ethylene glycol dicrotonate, tetramethylene glycol dicrotonate, pentaerythritol dicrotonate or sorbitol tetradicrotonate; isocrotonic acid esters, for example, ethylene glycol diisocrotonate, pentaerythritol diisocrotonate or sorbitol tetraisocrotonate; and maleic acid esters, for example, ethylene glycol dimaleate, triethylene glycol dimaleate, pentaerythritol dimaleate and sorbitol tetramaleate.

Other examples of the ester, which can be preferably used, include aliphatic alcohol esters described in JP-B-51-47334 and JP-A-57-196231, esters having an aromatic skeleton described in JP-A-59-5240, JP-A-59-5241 and JP-A-2-226149, and esters containing an amino group described in JP-A-1-165613.

The above-described ester monomers can also be used as a mixture.

Specific examples of the monomer, which is an amide of an aliphatic polyvalent amine compound with an unsaturated carboxylic acid, include methylene bisacrylamide, methylene bismethacrylamide, 1,6-hexamethylene bisacrylamide, 1,6-hexamethylene bismethacrylamide, diethylenetriamine trisacrylamide, xylylene bisacrylamide and xylylene bismethacrylamide. Other preferred examples of the amide monomer include amides having a cyclohexylene structure described in JP-B-54-21726.

Urethane type addition polymerizable compounds produced using an addition reaction between an isocyanate and a hydroxy group are also preferably used, and specific examples thereof include vinylurethane compounds having two or more polymerizable vinyl groups per molecule obtained by adding a vinyl monomer containing a hydroxy group represented by formula (V) shown below to a polyisocyanate compound having two or more isocyanate groups per molecule, described in JP-B-48-41708.

CH₂=C(R⁴)COOCH₂CH(R⁵)OH (V)

wherein R⁴ and R⁵ each independently represents H or CH₃.

Also, urethane acrylates described in JP-A-51-37193, JP-B-2-32293 and JP-B-2-16765, and urethane compounds having an ethylene oxide skeleton described in JP-B-58-49860, JP-B-56-17654, JP-B-62-39417 and JP-B-62-39418 are preferably used. Furthermore, a photopolymerizable composition having remarkably excellent photosensitive speed can be obtained by using an addition polymerizable compound having an amino structure or a sulfide structure in its molecule, described in JP-A-63-277653, JP-A-63-260909 and JP-A-1-105238.

Other examples include polyfunctional acrylates and methacrylates, for example, polyester acrylates and epoxy acrylates obtained by reacting an epoxy resin with acrylic acid or methacrylic acid, described in JP-A-48-64183. JP-B-49-43191 and JP-B-52-30490. Specific unsaturated compounds described in JP-B-46-43946, JP-B-1-40337 and JP-B-1-40336, and vinylphosphonic acid type compounds described in JP-A-2-25493 can also be exemplified. In some cases, structure containing a perfluoroalkyl group described in JP-A-61-22048 can be preferably used. Moreover, photocurable monomers or oligomers described in Nippon Secchaku Kyokaishi (journal of Japan Adhesion Society), Vol. 20, No. 7, pages 300 to 308 (1984) can also be used.

Details of the method of using the polymerizable compound, for example, selection of the structure, individual or combination use, or an amount added, can be appropriately arranged depending on the characteristic design of the final lithographic printing plate precursor. For instance, the compound is selected from the following standpoints.

In view of the sensitivity, a structure having a large content of unsaturated groups per molecule is preferred and in many cases, a bifunctional or more functional compound is preferred. In order to increase the strength of image area, that is, hardened layer, a trifunctional or more functional compound is preferred A combination use of compounds different in the functional number or in the kind of polymerizable group (for example, an acrylic acid ester, a methacrylic acid ester, a styrene compound or a vinyl ether compound) is an effective method for controlling both the sensitivity and the strength.

The selection and use method of the polymerizable compound are also important factors for the compatibility and dispersibility with other components (for example, a binder polymer, a polymerization initiator or a coloring agent) in the image-recording layer. For instance, the compatibility may be improved in some cases by using the compound of low purity or using two or more kinds of the compounds in combination. A specific structure may be selected for the purpose of improving an adhesion property to a support or a protective layer described hereinafter.

The polymerizable compound (C) is preferably used in an amount from 5 to 80% by weight, more preferably from 25 to 75% by weight, based on the nonvolatile component of the image-recording layer. The polymerizable compounds may be used individually or in combination of two or more thereof. In the method of using the polymerizable compound, the structure, blend and amount added can be appropriately selected by taking account of the extent of polymerization inhibition due to oxygen, resolution, fogging property, change in refractive index, surface adhesion and the like. Further, depending on the case, a layer construction, for example, an undercoat layer or an overcoat layer, and a coating method, may also be considered.

### <(D) Binder polymer>

A binder polymer which can be used in the invention can be selected from those heretofore known without restriction, and linear organic polymers having a film forming property are preferable. Examples of the binder polymer include acrylic resins, polyvinyl acetal resins, polyurethane resins, polyurea resins, polyimide resins, polyamide resins, epoxy resins, methacrylic resins, polystyrene resins, novolac type phenolic resins, polyester resins, synthesis rubbers and natural rubbers.

The binder polymer preferably has a crosslinkable property in order to improve the film strength of the image area. In order to impart the crosslinkable property to the binder polymer, a crosslinkable functional group, for example, an ethylenically unsaturated bond is introduced into a main chain or side chain of the polymer. The crosslinkable functional group may be introduced by copolymerization.

Examples of the polymer having an ethylenically unsaturated bond in the main chain thereof include poly-1,4-butadiene and poly-1,4-isoprene.

Examples of the polymer having an ethylenically unsaturated bond in the side chain thereof include a polymer of an ester or amide of acrylic acid or methacrylic acid, which is a polymer wherein the ester or amide residue (R in -COOR or -CONHR) has an ethylenically unsaturated bond.

Examples of the residue (R described above) having an ethylenically unsaturated bond include -(CH₂)ₙCR¹=CR²R³, -(CH₂O)ₙCH₂CR¹=CR²R³, -(CH₂CH₂O)ₙCH₂CR¹=CR²R³, -(CH₂)ₙNH-CO-O.CH₂CR¹=CR²R³, -(CH₂)ₙ-O-CO-CR¹=CR²R³ and -(CH₂CH₂O)₂-X (wherein R¹ to R³ each represents a hydrogen atom, a halogen atom or an alkyl group having from 1 to 20 carbon atoms, an aryl group, alkoxy group or aryloxy group, or R¹ and R² or R¹ and R³ may be combined with each other to form a ring. n represents an integer of 1 to 10. X represents a dicyclopentadienyl residue).

Specific examples of the ester residue include -CH₂CH=CH₂ (describes in JP-B-7-21633), -CH₂CH₂O-CH₂CH=CH₂, -CH₂C(CH₃)=H₂, -CH₂CH=CH-C₆H₅, -CH₂CH₂OCOCH=CH-C₆H₅, -CH₂CH₂-NHCOO-CH₂CH=CH₂ and -CH₂CH₂O-X (wherein X represents a dicyclopentadienyl residue).

Specific examples of the amide residue include -CH₂CH=CH₂, -CH₂CH₂-Y (wherein Y represents a cyclohexene residue) and -CH₂CH₂-OCO-CH-CH₂.

The binder polymer having crosslinkable property is hardened, for example, by adding a free radical (a polymerisation initiating radical or a growing radical of a polymerizable compound during polymerization) to the crosslinkable functional group of the polymer and undergoing addition polymerization between the polymers directly or through a polymerization chain of the polymerizable compound to form crosslinkage between the polymer molecules. Alternately, it is hardened by generation of a polymer radical upon extraction of an atom in the polymer (for example, a hydrogen atom on a carbon atom adjacent to the functional crosslinkable group) by a free radial and connecting the polymer radicals with each other to form cross-linkage between the polymer molecules.

A content of the crosslinkable group in the binder polymer (content of the radical polymerizable unsaturated double bond determined by iodine titration) is preferably from 0.1 to 10.0 mmol, more preferably from 1.0 to 7.0 mmol and most preferably from 2.0 to 5.5 mmol, based on 1 g of the binder polymer. In the above-described range, preferable sensitivity and good preservation stability can be obtained.

From the standpoint of improvement in the on-machine development property, it is preferred that the binder polymer has high solubility or dispersibility in ink and/or dampening water.

In order to improve the solubility or dispersibility in the ink, the binder polymer is preferably oleophilic and in order to improve the solubility or dispersibility in the dampening water, the binder polymer is preferably hydrophilic. Therefore, it is effective in the invention that an oleophilic binder polymer and a hydrophilic binder polymer are used in combination.

The hydrophilic binder polymer preferably includes, for example, a polymer having a hydrophilic group, for example, a hydroxy group, a carboxy group, a carboxylate group, a hydroxyethyl group, a polyoxyethyl group, a hydroxypropyl group, a polyoxypropyl group, an amino group, an aminoethyl group, an aminopropyl group, an ammonium group, an amido group, a carboxymethyl group, a sulfonic acid group or a phosphoric acid group.

Specific examples thereof include gum arabic, casein, gelatin, a starch derivative, carboxy methyl cellulose and a sodium salt thereof, cellulose acetate, sodium alginate, vinyl acetate-maleic acid copolymer, styrene-maleic acid copolymer, polyacrylic acid and a salt thereof, polymethacrylic acid and a salt thereof, a homopolymer or copolymer of hydroxyethyl methacrylate, a homopolymer or copolymer of hydroxyethyl acrylate, a homopolymer or copolymer of hydroxypropyl methacrylate, a homopolymer or copolymer of hydroxypropyl acrylate, a homopolymer or copolymer of hydroxybutyl methacrylate, a homopolymer or copolymer of hydroxybutyl acrylate, a polyethylene glycol, a hydroxypropylene polymer, a polyvinyl alcohol, a hydrolyzed polyvinyl acetate having a hydrolysis degree of 60% by mole or more, preferably 80% by mole or more, a polyvinyl formal, a polyvinyl butyral, a polyvinyl pyrrolidone, a homopolymer or copolymer of acrylamide, a homopolymer or polymer of methacrylamide, a homopolymer or copolymer of N-methylolacrylamide, a polyvinyl pyrrolidone, an alcohol-soluble nylon, a polyether of 2,2-bis-(4-hydroxyphenyl)propane and epichlorohydrin

A weight average molecular weight of the binder polymer is preferably 5,000 or more, more preferably from 10,000 to 300,000. A number average molecular weight of the binder polymer is preferably 1,000 or more, more preferably from 2,000 to 250,000. The polydispersity (weight average molecular weight/number average molecular weight) thereof is preferably from 1.1 to 10.

The binder polymer may be any of a random polymer and a block polymer, and preferably a random polymer. The binder polymers may be used individually or as a mixture of two or more thereof

The binder polymer can be synthesized by a conventionally known method. A solvent used for the synthesis include, for example, tetrahydrofuran, ethylene dichloride, cyclohexanone, methyl ethyl ketone, acetone, methanol, ethanol, ethylene glycol monomethyl ether, ethylene glycol monoethyl ether, 2-methoxyethyl acetate, diethylene glycol dimethyl ether, 1-methoxy-2-propanol, 1-methoxy-2-propylacetate, N,N-dimethylformamide, N,N-dimethylacetoamide, toluene, ethyl acetate, methyl lactate, ethyl lactate, dimethylsulfoxide and water. The solvents may be used individually or as a mixture of two or more thereof.

As a radical polymerization initiator used for the synthesis of binder polymer, a known compound, for example, an azo-typc initiator or a peroxide initiator can be employed.

A content of the binder polymer (D) is preferably, from 0 to 90% by weight, more preferably from 0 to 80% by weight, and still more preferably from 0 to 70% by weight, based on the total solid content of the image-recording layer. In the above-described range, good strength of the image area and preferable image-forming property can be obtained.

It is preferred that the polymerizable compound (C) and the binder polymer (D) are used in a weight ratio of 0.5/1 to 4/1.

Into the image-recording layer of the lithographic printing plate precursor according to the invention, various compounds can further be incorporated depending on the purposes to the extent that they do not damage the effect of the invention, in addition to the above-described components (A) to (D).

### <Surfactant>

In the invention, it is preferred to use a surfactant in the image-recording layer in order to promote the on-machine development property at the start of printing and to improve the state of coated surface. The surfactant used includes, for example, a nonionic surfactant, an anionic surfactant, a cationic surfactant, an amphoteric surfactant and a fluorine-based surfactant. The surfactants may be used individually or in combination of two or more thereof.

The nonionic surfactant used in the invention is not particular restricted, and those hitherto known can be used. Examples of the nonionic surfactant include polyoxyethylene alkyl ethers, polyoxyethylene alkyl phenyl ethers, polyoxyethylene polystyryl phenyl ethers, polyoxyethylene polyoxypropylene alkyl ethers, glycerin fatty acid partial esters, sorbitan fatty acid partial esters, pentaerythritol fatty acid partial esters, propylene glycol monofatty acid esters, sucrose fatty acid partial esters, polyoxyethylene sorbitan fatty acid partial esters, polyoxyethylene sorbitol fatty acid partial esters, polyethylene glycol fatty acid esters, polyglycerol fatty acid partial esters, polyoxyethylenated castor oils, polyoxyethylene glycerol fatty acid partial esters, fatty acid diethanolamides, N,N-bis-2-hydroxyalkylamines, polyoxyethylene alkylamines, triethanolamine fatty acid esters, trialylamine oxides, polyethylene glycols, and copolymers of polyethylene glycol and polypropylene glycol.

The anionic surfactant used in the invention is not particularly restricted and those hitherto known can be used. Examples of the anionic surfactant include fatty acid salts, abietic acid salts, hydroxyalkanesulfonic acid salts, alkanesulfonic acid salts, dialkylsulfosuccinic ester salts, straight-chain alkylbenzenesulfonic acid salts, branched alkylbenzenesulfonic acid salts, alkylnaphthalenesulfonic acid salts, alkylphenoxypolyoxyethylene propylsulfonic acid salts, polyoxyethylene alkylsulfophenyl ether salts, N-methyl-N-oleyltaurine sodium salt, N-alkylsulfosuccinic monoamide disodium salts, petroleum sulfonic acid salts, sulfated beef tallow oil, sulfate ester slats of fatty acid alkyl ester, alkyl sulfate ester salts, polyoxyethylene alkyl ether sulfate ester salts, fatty acid monoglyceride sulfate ester salts, polyoxyethylene alkyl phenyl ether sulfate ester salts, polyoxyethylene styrylphenyl ether sulfate ester salts, alkyl phosphate ester salts, polyoxyethylene alkyl ether phosphate ester salts, polyoxyethylene alkyl phenyl ether phosphate ester salts, partial saponification products of styrene/maleic anhydride copolymer, partial saponification products of olefin/maleic anhydride copolymer and naphthalene sulfonate formalin condensates.

The cationic surfactant used in the invention is not particularly restricted and those hitherto known can be used. Examples of the cationic surfactant include alkylamine salts, quaternary ammonium salts, polyoxyethylene alkyl amine salts and polyethylene polyamine derivatives.

The amphoteric surfactant used in the invention is not particularly restricted and those hitherto known can be used. Examples of the amphoteric surfactant include carboxybetaines, aminocarboxylic acids, sulfobetaines, aminosulfuric esters, and imidazolines.

In the surfactants described above, the term "polyoxyethylene" can be replaced with "polyoxyalkylene", for example, polyoxymethylene, polyoxypropylene or polyoxybutylene, and such surfactants can also be used in the invention.

Further, a preferred surfactant includes a fluorino-based surfactant containing a perfluoroalkyl group in its molecule. Examples of the fluorine-based surfactant include an anionic type, for example, perfluoroalkyl carboxylates, perfluoroalkyl sulfonates or perfluoroalkylphosphates; an amphoteric type, for example, perfluoroalkyl betaines; a cationic type, for example, perfluoroalkyl trimethyl ammonium salts; and a nonionic type, for example, perfluoroalkyl amine oxides, perfluoroalkyl ethylene oxide adducts, oligomers having a perfluoroalkyl group and a hydrophilic group, oligomers having a perfluoroalkyl group and an oleophilic group, oligomers having a perfluoroalkyl group, a hydrophilic group and an oleophilic group or urethanes having a perfluoroalkyl group and an oleophilic group. Further, fluorine-based surfactants described in JP-A-62-170950; JP-A-62-226143 and JP-A-60-168144 are also preferably exemplified.

The surfactants can be used individually or in combination of two or more thereof.

A content of the surfactant is preferably from 0.001 to 10% by weight, more preferably from 0.01 to 7% by weight, based on the total solid content of the image-recording layer.

### <Coloring agent>

To the image-recording layer according to the invention, various compounds other than those described above may further be added, if desired. For instance, a dye having a large absorption in the visible region can be used as a coloring agent of the image formed. Specifically, the dye includes Oil yellow #101, Oil yellow #103, Oil pink #312, Oil green BG, Oil blue BOS, Oil blue #603, Oil black BY, Oil black BS, Oil black T-505 (produced by Orient Chemical Industries, Ltd.), Victoria pure blue, Crystal violet (CI42555), Methyl violet (CI42535), Ethyl violet, Rhodamine B (CI45170B), Malachite green (CI42000), Methylene blue (CI52015) and dyes described in JP-A-62-293247. Further, a pigment, for example, a phthalocyanine pigment, an azo pigment, carbon black or titanium oxide can also preferably be used.

It is preferred to add the coloring agent since distinction between the image area and the non-image area is easily conducted after the formation of image. An amount of the coloring agent added is preferably from 0.01 to 10% by weight based on the total solid content of the image-recording layer.

### <Print-out agent>

To the image-recording layer according to the invention, a compound causing discoloration by an acid or a radical can be added in order to form a print-out image. As such a compound, various kinds of dyes, for example, dyes of diphenylmethane type, triphenylmethane type, triazine type, oxazine type, xanthene type, anthraquinone type, iminoquinone type, azo type and azomethine type are effectively used.

Specific examples thereof include dyes, for example, Brilliant green, Ethyl violet, Methyl green, Crystal violet, basic Fuchsine, Methyl violet 2B, Quinaldine red, Rose Bengal, Methanyl yellow, Thimol sulfophthalein, Xylenol blue, Methyl orange, Paramcthyl red, Congo red, Benzo purpurin 4B, α-Naphthyl red, Nile blue 2B, Nile blue A, Methyl violet, Malachite green, Parafuchsine, Victoria pure blue BOH (produced by Hodogaya Chemical Co., Ltd.), Oil blue #603 (produced by Orient Chemical Industries, Ltd.), Oil pink #312 (produced by Orient Chemical Industries, Ltd.), Oil red 5B (produced by Orient Chemical Industries, Ltd.), Oil scarlet #308 (produced by Orient Chemical Industries, Ltd.), Oil red OG (produced by Orient Chemical Industries, Ltd.), Oil red RR (produced by Orient Chemical Industries, Ltd.), oil green #502 (produced by Orient Chemical Industries, Ltd.), Spiron Red BEH special (produced by Hodogaya Chemical Co., Ltd.), m-Cresol purple, Cresol red, Rhodamine B, Rhodamine 6G, Sulfo rhodamine B, Auramine, 4-p-diethylaminophenyliminonaphthoquione, 2-carboxyanilino-4-p-diethylaminophenyliminonaphthoquinone, 2-boxystearylamino-4-p-N,N-bis(hydroxyethyl)aminophenyliminonaphthoquinone, 1-phenyl-3-methyl-4-p-diethylaminophenylimino-5-pyrazolon or 1-β-naphtyl-4-p-diethylaminophenylimino-5-pyrazolon, and a leuco dye, for example, p, p', p"-hexamethyltriaminotriphenylmethane (leuco crystal violet) or Pergascript Blue SRB (produced by Ciba Geigy Ltd.).

In addition to those described above, a leuco dye known as a material for heat-sensitive paper or pressure-sensitive paper is also preferably used. Specific examples thereof include crystal violet lactone, malachite green lactone, benzoyl leuco methylene blue, 2-(N-phenyl-N-methylamino)-6-(N-p-tolyl-N-ethyl)aminolluoran, 2-anilino-3-methyl-6-(n-ethyl-p-tolidino)fluoran, 3,6-dimethoxyfluoran, 3-(N,N-diethylamino)-5-methyl-7-(N,N-dibenaylamino)fluoran, 3-(N-cyclohexyl-N-methylainino)-6-methyl-7-anilinofluoran, 3-(N-N-diethylamino)-6-methyl-7-anilinofluoran, 3 -(N,N-diethylamino)-6-methyl-7-xylidinofluoran, 3-(N,N-diethyla'mino)-6-methyl-7-chlorolluoran, 3-(N,N-diethylamino)-6-methoxy-7-aminofluoran, 3-(N,N-diethylanino)-7-(4-chloroanilino)fluoran, 3-(N,N-diethylarnino)-7-chlorofluoran, 3-(N,N-diethylamino)-7-benzylaminofluoran, 3-(N,N-diethylamino)-7,8-benzofluntan, 3-(N,N-dibutylamino)-6-methyl-7-anilinofluoran, 3-(N,N-dibutylamino)-6-methyl-7-xylidinofluoran, 3-pipelidino-6-methyl-7-anilinofluoran, 3-pyrolidino-6-methyl-7-anilinofluoran, 3,3-bis(1-ethyl-2-methylindol-3-yl)phthalide, 3,3-bis(I-n-butyl-2-methylindol-3-yl)phthalide, 3,3-bis(p-dunethylaminophenyl)-6-dimethylaminophthalide, 3-(4-diethylamino-2-ethoxyphenyl)-3-(-ethyl-2-methylindol-3-yl)-4-phthalide and 3-(4-diethylatninophenyl)-3-(1-ethyl-2-methylindol-3-yl)phthalide.

The dye discolored by an acid or radical is preferably added in an amount of 0.01 to 10% by weight based on the solid content of the image-recording layer.

### <Polymerization inhibitor>

It is preferred to add a small amount of a thermal polymerization inhibitor to the image-recording layer according to the invention in order to inhibit undesirable thermal polymerization of the Polymerizable compound (C) during the production or preservation of the image-recording layer.

The thermal polymerization inhibitor preferably includes, for example, hydroquinone, p-methoxyphenol, di-tert-butyl-p-cresol, pyrogallol, tert-butyl catechol, benzoquinone, 4,4'-thiobis(3-methyl-6-tert-butylphenol), 2,2'-methylenebis(4-methyl-6-tcrt-butylphenol) and N-nitroso-N-phenylhydroxylamine aluminum salt.

An amount of the thermal polymerization inhibitor added is preferably from about 0.01 to about 5% by weight based on the total solid content of the image-recording layer.

### <Higher fatty acid derivative>

To the image-recording layer according to the invention, a higher fatty acid derivative, for example, behenic acid or behenic acid amide may be added to localize on the surface of the image-recording layer during a drying step after coating in order to avoid polymerization inhibition due to oxygen. An amount of the higher fatty acid derivative added is preferably from about 0.1 to about 10% by weight based on the total solid content of the image-recording layer.

### <plasticizer>

The image-recording layer according to the invention may also contain a plasticizer in order to improve the on-machine development property. The plasticizer preferably includes, for example, a phthalic acid ester, e.g., diemthylphthalate, diethylphthalate, dibutylphthalate, diisobutylphthalate, dioctylphthalate, octylcaprylphthalate, dicyclohexylphthalate, ditridecylphthalate, butylbenzylphthalate, diisodecylphthalate or diallylphthalate; a glycol ester, e.g., dimethylglycolphthalate, ehtylphtalylethylglycolate, methylphthalylethylglycolate, butylphthalylbutylglycolate or triethylene glycol dicaprylate ester; a phosphoric acid ester, e.g., tricresylphosphate or triphenylpbosphate; an aliphatic dibasic acid ester, e.g., diisobutyladipate, dioctyladipate, dimethylsebacate, dibutylsebacate, dioctylazelate or dibutylmaleate; polyglycidylmethacrylate, triethyl citrate, glycerin triacetyl ester and butyl laurate.

An amount of the plasticizer is preferably about 30% by weight or less based on the total solid content of the image-recording layer.

### <Fine inorganic particle>

The image-recording layer according to the invention may contain fine inorganic particle in order to increase the hardened film strength in the image area and to improve the on-machine development property in the non-imaging area.

The fine inorganic particle preferably includes, for example, silica, alumina, magnesium oxide, titanium oxide, magnesium carbonate, calcium alginate and a mixture thereof. Even if the fine inorganic particle has no light to heat converting property, it can be used, for example, for strengthening the film or enhancing interface adhesion due to surface roughening.

The fine inorganic particle preferably has an average particle size from 5 nm to 10 µm and more preferably from 0.5 to 3µm. In the above-described range, it is stably dispersed in the image-recording layer, sufficiently maintains the film strength of the image-recording layer and can form the non-imaging area excellent in hydrophilicity and prevented from stain during printing.

The fine inorganic particle described above is easily available as a commercial product, for example, colloidal silica dispersion.

An amount of the fine inorganic particle added is preferably 20% by weight or less and more preferably 10% by weight or less based on the total solid content of the image-recording layer.

### <Hydrophilic low molecular weight compound>

The image-recording layer according to the invention may contain a hydrophilic low molecular weight compound in order to improve the on-machine development property. The hydrophilic low molecular weight compound includes a water soluble organic compound, for example, a glycol compound, e.g., ethylene glycol, diethylene glycol, triethylene glycol, propylene glycol, dipropylene glycol or tripropylene glycol, or an ether or ester derivative thereof, a polyhydroxy compound, e.g., glycerine or pentaerythritol, an organic amine compound, e.g., triethanol amine, diethanol amine or monoethanol amine, or a salt thereof an organic sulfonic acid compound, e.g., toluene sulfonic acid or benzene sulfonic acid, or a salt thereof, an organic phosphonic acid compound, e.g., phenyl phosphonic acid, or a salt thereof, an organic carboxylic acid compound, e.g., tartaric acid, oxalic acid, citric acid, malic acid, lactic acid, gluconic acid or an amino acid.

### <(E) Microcapsule or microgel>

In the invention, several embodiments can be employed in order to incorporate the above-described constituting components of the image-recording layer and other constituting components described hereinafter into the image-recording layer. One embodiment is an image-recording layer of molecular dispersion type prepared by dissolving the constituting components in an appropriate solvent to coat as described, for example, in JP-A-2002-287334. Another embodiment is an image-recording layer of microcapsule type prepared by encapsulating all or part of the constituting components into microcapsule to incorporate into the image-recording layer as described, for example, in JP-A-2001-277740 and JP-A-2001-277742. In the image-recording layer of microcapsule type, the constituting components may be present outside the microcapsules. It is a more preferred embodiment of the image-recording layer of microcapsule type that hydrophobic constituting components is encapsulated in microcapsules and hydrophilic components are present outside the microcapsules. A still another embodiment is an image-recording layer containing a crosslinked resin particle, that is, a microgel. The microgel can contain a part of the constituting components inside or on the surface thereof. Particularly, an embodiment of a reactive microgel containing the polymerizable compound on the surface thereof is preferable in view of the image-forming sensitivity and printing durability.

In order to achieve more preferable on-machine development property, the image-recording layer is preferably the image-recording layer of microcapsule type or microgel type.

As a method of microencapsulation or microgelation of the constituting components of the image-recording layer, known methods can be used.

Methods of producing the microcapsule include, for example, a method of utilizing coacervation described in U.S. Patents 2,800,457 and 2,800,458, a method of using interfacial polymerization described in U.S. Patent 3,287,154, JP-B-38-19574 and JP-B-42-446, a method of using deposition of polymer described in U.S. Patents 3,418,250 and 3,660,304, a method of using an isocyanate polyol wall material described in U.S. Patent 3,796,669, a method of using an isocyanate wall material described in U.S. Patent 3,914,511, a method of using a urea-forrnaldehyde-type or urea-formaldehyde-resorcinol-type wall-forming material described in U.S. Patens 4,001,140, 4,087,376 and 4,099,802, a method of using a wall material, for example, a melamine-formaldehyde resin or hydroxyccllulose described in U.S. Patent 4,025,445, an in-situ method by monomer polymerization described in JP-B-36-9163 and JP-B-51-9079, a spray drying method described in British Patent 930,422 and U.S. Patent 3,111,407, and an electrolytic dispersion cooling method described in British Patents 952,807 and 967,074, but the invention should not be construed as being limited thereto.

A preferred microcapsule wall used in the invention has three-dimensional crosslinking and has a solvent-swellable property. From this point of view, a preferred wall material of the microcapsule includes polyurea, polyurethane, polyester, polycarbonate, polyamide and a mixture thereof, and polyurea and polyurethane are particularly preferred. Further, a compound having a crosslinkable functional group, for example, an ethylenically unsaturated bond, capable of being introduced into the binder polymer described above may be introduced into the microcapsule wall.

On the other hand, methods of preparing the microgel include, for example, a method of utilizing granulation by interfacial polymerization described in JP-B-38-19574 and JP-B-42-446 and a method of utilizing granulation by dispersion polymerization in a non-aqueous system, but the invention should not be construed as being limited thereto.

To the method utilizing interfacial polymerization, known production methods of microcapsule can be applied.

The microgel preferably used in the invention is granulated by interfacial polymerization and has three-dimensional crosslinking. From this point of view, a preferred material to be used includes polyurea, polyurethane, polyester, polycarbonate, polyamide and a mixture thereof, and polyurea and polyurethane are particularly preferred.

An average particle size of the microcapsule or microgel is preferably from 0.01 to 3.0 µm, more preferably from 0.05 to 2.0 µm, and particularly preferably from 0.10 to 1.0 µm. In the above-described range, favorable resolution and good preservation stability can be achieved.

### [Formation of image-recording layer]

The image-recording layer according to the invention is formed by dissolving or dispersing each of the necessary constituting components described above in a solvent to prepare a coating solution and coating the solution. The solvent used include, for example, ethylene dichloride, cyclohexanone, methyl ethyl ketone, methanol, ethanol, propanol, ethylene glycol monomethyl ether, 1-methoxy-2-propanol, 2-methxyethyl acetate, 1-methoxy-2-propyl acetate, dimethoxyethane, methyl lactate, ethyl lactate, N,N-dimethylacetoamide, N,N-dimethylformamide, tetramethylurea, N-methylpyrrolidone, dimethylsulfoxide, sulfolane, γ-butyrolactone, toluene and water, but the invention should not be construed as being limited thereto. The solvents may be used individually or as a mixture. The solid content concentration of the coating solution is preferably from 1 to 50% by weight

The image-recording layer according to the invention may also be formed by preparing plural coating solutions by dispersing or dissolving the same or different components described above into the same or different solvents and conducting repeatedly the coating and drying plural times.

A coating amount of the image-recording layer (solid content) formed on a support after drying may be varied according to the intended purpose but is preferably from 0.3 to 3.0 g/m². In the above-described range, preferable sensitivity and good film property of the image-recording layer can be achieved.

Various methods can be used for the coating. Examples of the coating method include bar coater coating, spin coating, spray coating, curtain coating, dip coating, air knife coating, blade coating and roll coating.

### [Support]

A support for use in the lithographic printing plate precursor according to the invention is not particularly restricted as long as it is a dimensionally stable plate-like material. The support includes, for example, paper, paper laminated with plastic (for example, polyethylene, polypropylene or polystyrene), a metal plate (for example, aluminum, zinc or copper plate), a plastic film (for example, cellulose diacetate, cellulose triacctate, cellulose propionate, cellulose butyrate, cellulose acetate butyrate, cellulose nitrate, polyethylene terephthalate, polyethylene, polystyrene, polypropylene, polycarbonate or polyvinyl acetal film) and paper or a plastic film laminated or deposited with the metal described above. A preferred support includes a polyester film and an aluminum plate. Among them, the aluminum plate is preferred since it has good dimensional stability and is relatively inexpensive.

The aluminum plate includes a pure aluminum plate, an alloy plate comprising aluminum as a main component and containing a trace amount of hetero elements and a thin film of aluminum or aluminum alloy laminated with plastic. The hetero element contained in the aluminum alloy includes, for example, silicon, iron, manganese, copper, magnesium, chromium, zinc, bismuth, nickel and titanium. The content of the hetero element in the aluminum alloy is preferably 10% by weight or less. Although a pure aluminum plate is preferred in the invention, since completely pure aluminum is difficult to be produced in view of the refining technique, the aluminum plate may slightly contain the hetero element. The composition is not specified for the aluminum plate and those materials conventionally known and used can be appropriately utilized.

The thickness of the support is preferably from 0.1 to 0.6 mm, more preferably from 0.15 to 0.4 mm, and still more preferably from 0.2 to 0.3 mm.

In advance of the use of aluminum plate, a surface treatment, for example, roughening treatment or anodizing treatment, is preferably performed. The surface treatment facilitates improvement in the hydrophilic property and ensure for adhesion between the image-recording layer and the support. Prior to the roughening treatment of the aluminum plate, a degreasing treatment, for example, with a surfactant, an organic solvent or an aqueous alkaline solution is conducted for removing rolling oil on the surface thereof, if desired.

The roughening treatment of the surface of the aluminum plate is conducted by various methods and includes, for example, mechanical roughening treatment, electrochemical roughening treatment (roughening treatment of electrochemically dissolving the surface) and chemical roughening treatment (roughening treatment of chemically dissolving the surface selectively).

As the method of the mechanical roughening treatment, a known method, for example, ball graining, brush graining, blast graining or buff graining can be used.

The electrochemical roughening treatment method includes, for example, a method of conducting by passing alternating current or direct current in an electrolyte containing an acid, for example, hydrochloric acid or nitric acid Also, a method of using a mixed acid described in JP-A-54-63902 can be exemplified.

The aluminum plate subjected to the roughening treatment is subjected, if desired, to an alkali etching treatment using an aqueous solution, for example, of potassium hydroxide or sodium hydroxide and further subjected to a neutralizing treatment, and then subjected to an anodizing treatment for improving the abrasion resistance, if desired.

As the electrolyte used for the anodizing treatment of the aluminum plate, various electrolytes capable of forming porous oxide film can be used. Ordinarily, sulfuric acid, hydrochloric acid, oxalic acid, chromic acid or a mixed acid thereof is used. The concentration of the electrolyte can be appropriately determined depending on the kind of the electrolyte.

Since the conditions for the anodizing treatment are varied depending on the electrolyte used, they cannot be defined commonly. However, it is ordinarily preferred that electrolyte concentration in the solution is from 1 to 80% by weight, liquid temperature is from 5 to 70°C, current density is from 5 to 60 A/dm², voltage is from 1 to 100 V, and electrolysis time is from 10 seconds to 5 minutes. The amount of the anodized film formed is preferably from 1.0 to 5.0 g/m² and more preferably from 1.5 to 4.0 g/m². In the above-described range, good printing durability and good scratch resistance in the non-image area of lithographic printing plate can be achieved.

The aluminum plate subjected to the anodizing treatment is then subjected to a hydrophilizing treatment on the surface thereof, if desired. The hydrophilizing treatment includes an alkali metal silicate method described in U.S. Patents 2,714,066, 3,181,461, 3,280,734 and 3,902,734. In the method, the support is subjected to an immersion treatment or an electrolytic treatment in an aqueous solution, for example, of sodium silicate. In addition, the hydrophilizing treatment includes, for example, a method of treating with potassium fluorozirconate described in JP-B-36-22063 and a method of treating with polyvinylphosphonic acid described in U.S. Patents 3,276,868, 4,153,461 and 4,689,272.

The support preferably has a center line average roughness of 0.10 to 1.2 µm. In the above-described range, good adhesion to the image-recording layer, good printing durability, and good resistance to stain can be achieved.

Further, color density of the support is preferably from 0.15 to 0.65 in terms of a reflection density value. In the above-described range, good image-forming property due to prevention of halation at the image exposure and good plate inspection property after development can be achieved.

### [Backcoat layer]

After applying the surface treatment or forming an undercoat layer to the support, a backcoat layer can be provided on the back surface of the support, if desired.

The backcoat layer preferably used includes, for example, a coating layer comprising an organic polymer compound described in JP-A-5-45885 and a coating layer comprising a metal oxide obtained by hydrolysis and polycondensation of an organic metal compound or an inorganic metal compound described in JP-A-6-35174. Among them, use of an alkoxy compound of silicon, for example, Si(OCH₃)₄, Si(OC₂H₅)₄, Si(OC₃H₇)₄, or Si(OC4H₉)₄ is preferred since the starting material is inexpensive and easily available.

### [Undercoat layer]

In the lithographic printing plate precursor, an undercoat layer can be provided between the support and the image-recording layer, if desired. It is advantageous that in the case of infrared laser exposure, since the undercoat layer acts as a heat insulating layer, heat generated upon the exposure does not diffuse into the support and is efficiently utilized so that increase in sensitivity can be achieved. Further, the undercoat layer makes removal of the image-recording layer from the support in the unexposed area easy so that the on-machine development property can be improved.

As a compound for the undercoat layer, specifically, for example, a silane coupling agent having an addition-polymerizable ethylenic double bond reactive group described in JP-A-10-282679 and a phosphorus compound having an ethylenic double bond reactive group are preferably exemplified.

As the most preferred compound for undercoat layer, a polymer resin obtained by copolymerization of a monomer having an adsorbing group, a monomer having a hydrophilic group and a monomer having a crosslinkable group is exemplified.

The essential component in the polymer resin for use in the undercoat layer is an adsorbing group to the hydrophilic surface of the support. Whether the adsorptivity to the hydrophilic surface of the support is present or not can be judged, for example, by the following method.

Specifically, a test compound is dissolved in a solvent in which the test compound is easily soluble to prepare a coating solution, and the coating solution is coated and dried on a support so as to have the coating amount after drying of 30 mg/m². After thoroughly washing the support coated with the test compound using the solvent in which the test compound is easily soluble, the residual amount of the test compound that has not been removed by the washing is measured to calculate the adsorption amount to the support. For measuring the residual amount, the amount of the residual test compound may be directly determined, or it may be calculated from the amount of the test compound dissolved in the washing solution. The determination for the compound can be performed, for example, by fluorescent X-ray measurement, reflection spectral absorbance measurement or liquid chromatography measurement. The compound having the adsorptivity to support means a compound that remains by 1 mg/m² or more even after conducting the washing treatment described above.

The adsorbing group to the hydrophilic surface of the support is a functional group capable of forming a chemical bond (for example, an ionic bond, a hydrogen bond, a coordinate bond or a bond with intermolecular force) with a substance (for example, metal or metal oxide) or a functional group (for example, a hydroxy group) present on the surface of the support. The adsorbing group is preferably an acid group or a cationic group.

The acid group preferably has an acid dissociation constant (pKa) of 7 or less. Examples of the acid group include a phenolic hydroxy group, a carboxy group, -SO₃H, -OSO₃H, -PO₃H₂, -OPO₃H₂, -CONHSO₂-, -SO₂NHSO₂- and -COCH₂COCH₃. Among them, -OPO₃H₂ and -PO₃H₂ are particularly preferred. The acid group may be the form of a metal salt.

The cationic group is preferably an onium group. Examples of the onium group include an ammonium group, a phosphonium group, an arsonium group, a stibonium group, an oxonium group, a sulfonium group, a selenonium group, a stannonium group and iodonium group. Among them, the ammonium group, phosphonium group and sulfonium group are preferred, the ammonium group and phosphonium group are more preferred, and the ammonium group is most preferred.

Particularly preferred examples of the monomer having the adsorbing group include compounds represented by the following formula (I) or (II):

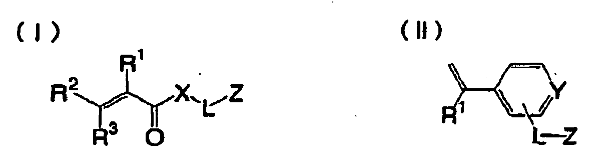

In formula (I) or (II), R¹, R² and R³ each independently represents a hydrogen atom, halogen atom or an alkyl group having from 1 to 6 carbon atoms. R¹ and R² and R³ each independently represents preferably a hydrogen atom or an alkyl group having from 1 to 6 carbon atoms, more preferably a hydrogen atom or an alkyl group having from 1 to 3 carbon atoms and, most preferably a hydrogen atom or a methyl group. It is particularly preferred that R² and R³ each represents a hydrogen atom.

In the formula (I), X represents an oxygen atom (-O-) or imino group (-NH-). Preferably, X represents an oxygen atom. In the formula (I) or (II), L represents a divalent connecting group. It is preferred that L represents a divalent aliphatic group (for example, an alkylene group, a substituted alkylene group, an alkenylene group, a substituted alkenylene group, an alkinylene group or a substituted alkinylene group), a divalent aromatic group (for example, an arylene group or a substituted arylene group), a divalent heterocyclic group or a combination of each of the groups described above with an oxygen atom (-O-), a sulfur atom (-S-), an imino group (-NH-), a substituted imino group (-NR-, wherein R represents an aliphatic group, an aromatic group or a heterocyclic group) or a carbonyl group (-CO-).

The aliphatic group may form a cyclic structure or a branched structure. The number of carbon atoms of the aliphatic group is preferably from 1 to 20, more preferably from 1 to 15, and most preferably from 1 to 10. It is preferred that the aliphatic group is a saturated aliphatic group rather than an unsaturated aliphatic group. The aliphatic group may have a substituent. Examples of the substituent include a halogen atom, a hydroxy group, an aromatic group and a heterocyclic group.

The number of carbon atoms of the aromatic group is preferably from 6 to 20, more preferably from 6 to 15 and most preferably from 6 to 10. The aromatic group may have a substituent. Examples of the substituent include a halogen atom, a hydroxy group, an aliphatic group, an aromatic group and a heterocyclic group.

It is preferred that the heterocyclic group has a 5-membered or 6-membered ring as the hetero ring. Other heterocyclic ring, an aliphatic group or an aromatic ring may be condensed to the heterocyclic ring. The heterocyclic group may have a substituent. Examples of the substituent include a halogen atom, a hydroxy group, an oxo group (=O), a thio group (=S), an imino group (=NH), a substituted imino group (=N-R, where R represents an aliphatic group, an aromatic group or a heterocyclic group), an aliphatic group, an aromatic group and a heterocyclic group.

It is preferred that L represents a divalent connecting group containing a plurality of polyoxyalkylene structures. It is more preferred that the polyoxyalkylene structure is a polyoxyethylene structure. Specifically, it is preferred that L contains -(OCH₂CH₂)ₙ- (n is an integer of 2 or more).

In the formula (I) or (II), Z represents a functional group adsorbing to the hydrophilic surface of the support. In the formula (I), Y represents a carbon atom or a nitrogen atom. In the case where Y is a nitrogen atom and L is connected to Y to form a quaternary pyridinium group, Z is not mandatory, because the quaternary pyridinium group itself exhibits the adsorptivity.

The adsorptive functional group is the same as that described above.

Representative examples of the compound represented by formula (I) or (II) arc set forth below.

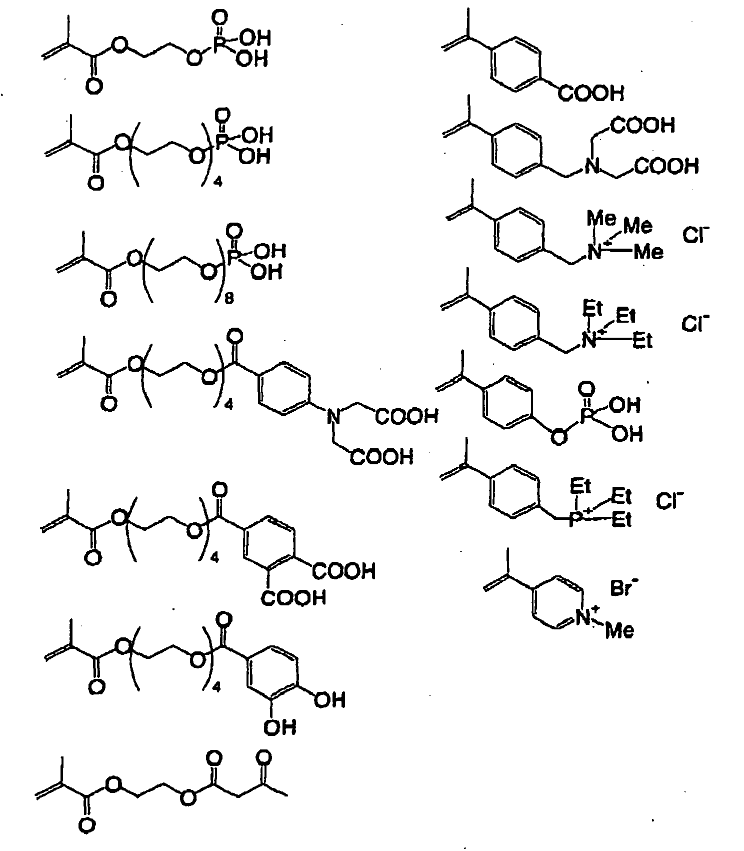

As a copolymer of the polymer resin for use in the undercoat layer which can be used in the invention, heretofore known copolymer can be used without any restriction. The hydrophilic binder polymer preferably includes, for example, a polymer having a hydrophilic group, for example, a hydroxy group, a carboxy group, a carboxylate group, a hydroxyethyl group, a polyoxyethyl group, a hydroxypropyl group, a polyoxypropyl group, an amino group, an aminoethyl group, an aminopropyl group, an ammonium group, an amido group, a carboxymethyl group, a sulfonic acid group or a phosphoric acid group.

Specific examples thereof include gum arabic, casein, gelatin, a starch derivative, carboxy methyl cellulose and a sodium salt thereof, cellulose acetate, sodium alginate, vinyl acetate-maleic acid copolymer, styrene-maleic acid copolymer, polyacrylic acid and a salt thereof, polymethacrylic acid and a salt thereof, a homopolymer or copolymer of hydroxyethyl methacrylate, a homopolymer or copolymer of hydroxyethyl acrylate, a homopolymer or copolymer of hydroxypropyl methacrylate, a homopolymer or copolymer of hydroxypropyl acrylate, a homopolymer or copolymer of hydroxybutyl methacrylate, a homopolymer or copolymer of hydroxybutyl acrylate, a polyethylene glycol, a hydroxypropylene polymer, a polyvinyl alcohol, a hydrolyzed polyvinyl acetate having a hydrolysis degree of 60% by mole or more, preferably 80% by mole or more, a polyvinyl formal, a polyvinyl butyral, a polyvinyl pyrrolidone, a homopolymer or copolymer of acrylamide, a homopolymer or polymer of methacrylamide, a homopolymer or copolymer of N-methylolacrylamide, a polyvinyl pyrrolidone, an alcohol-soluble nylon, a polyether of 2,2-bis-(4-hydroxyphenyl)propane and epichlorohydrin.

A weight average molecular weight of the binder polymer is preferably 5,000 or more, more preferably from 10,000 to 300,000. A number average molecular weight of the binder polymer is preferably 1,000 or more, more preferably from 2,000 to 250,000. The polydispersity (weight average molecular weight/number average molecular weight) thereof is preferably from 1.1 to 10.

The binder polymer may be any of a random polymer, a block polymer and a graft polymer, and preferably a random polymer.

It is preferred that the polymer resin for the undercoat layer according to the invention has a crosslinkable group in order to increase adhesion to the image area. In order to impart the crosslinkable property to the polymer resin for the undercoat layer, introduction of a crosslinkable functional group, for example, an ethylenically unsaturated bond into the side chain of the polymer resin, or introduction by formation of a salt structure between a polar substituent of the polymer resin and a compound containing a substituent having a counter charge to the polar substituent of the polymer resin and an ethylenically unsaturated bond is used.

Examples of the polymer having an ethylenically unsaturated bond in the side chain thereof include a polymer of an ester or amide of acrylic acid or methacrylic acid, which is a polymer wherein the ester or amide residue (R in -COOR or -CONHR) has an ethylenically unsaturated bond.

Examples of the residue (R described above) having an ethylenically unsaturated bond include -(CH₂)ₙCR¹=CR²R³, -(CH₂O)ₙCH₂CR¹=CR²R³, -(CH₂CH₂O)ₙCH₂CR₁=CR²R³, -(CH₂)ₙNH-CO-O-CH₂CR₁=CR²R³, -(CH₂)ₙ-O-CO-CR₁=CR²R³ and -(CH₂CH₂O)₂-X (wherein R¹ to R³ each independently represents a hydrogen atom, a halogen atom or an alkyl group having from 1 to 20 carbon atoms, an aryl group, alkoxy group or aryloxy group, or R¹ and R² or R¹ and R³ may be combined with each other to form a ring. n represents an integer of 1 to 10. X represents a dicyclopentadienyl residue).

Specific examples of the ester residue include -CH₂CH=CH₂ (described in JP-B-7-21633) -CH₂CH₂O-CH₂CH=CH₂, -CH₂C(CH₃)=CH₂, CH₂CH=CH-C₆H₅, -CH₂CH₂OCOCH=CH-C₆H₅, -CH₂CH₂-NHCOO-CH₂CH=CH₂ and -CH₂CH₂O-X (wherein X represents a dicyclopentadienyl residue).

Specific examples of the amide residue include -CH₂CH=CH₂, -CH₂CH₂O-Y (wherein Y represents a cyclohexene residue) and -CH₂CH₂-OCO-CH=CH₂.

A content of the crosslinking group in the polymer resin for undercoat layer (content of the radical polymerizable unsaturated double bond determined by iodine titration) is preferably from 0.1 to 10.0 mmol, more preferably from 1.0 to 7.0 mmol and most preferably from 2.0 to 5.5 mmol, based on 1 g of the polymer resin. In the above-described range, preferable compatibility between the sensitivity and stain resistance and good preservation stability can be achieved.

The polymer resins for undercoat layer may be used individually or in a mixture of two or more thereof.

Two or more kinds of the compounds having a functional group adsorbing to the hydrophilic surface of the support may be used together.

A coating amount (solid content) of the undercoat layer is preferably from 0.1 to 100 mg/m², and more preferably from 3 to 30 mg/m².

### [Protective layer]

In the lithographic printing plate precursor according to the invention, a protective layer (overcoat layer) can be provided on the image-recording layer, if desired, for the purpose of imparting an oxygen blocking property, preventing occurrence of scratch or the like on the image-recording layer, preventing ablation caused by exposure with a high illuminance laser beam or the like.

Ordinarily, the exposure process of a lithographic printing plate precursor is performed in the air. The image-forming reaction occurred upon the exposure process in the image-recording layer may be inhibited by a low molecular compound, for example, oxygen or a basic substance present in the air. The protective layer prevents the low molecular compound, for example, oxygen or a basic substance from penetrating into the image-recording layer and as a result, the inhibition of image-forming reaction at the exposure process in the air can be avoided. Accordingly, the property required of the protective layer is to reduce permeability of the low molecular compound, for example, oxygen. Further, the protective layer preferably has good transparency to light used for the exposure, is excellent in adhesion to the image-recording layer, and can be easily removed during the on-machine development processing step after the exposure. With respect to the protective layer having such properties, there are described, for example, in U.S. Patent 3,458,311 and JP-B-55-49729.

As a material for use in the protective layer, any water-soluble polymer and water-insoluble polymer can be appropriately selected to use. Specifically, a water-soluble polymer, for example, polyvinyl alcohol, modified polyvinyl alcohol, polyvinyl pyrrolidone, polyvinyl imidazole, polyacrylic acid, polyacrylamide, partially saponified product of polyvinyl acetate, ethylene-vinyl alcohol copolymer, water-soluble cellulose derivative, gelatin, starch derivative or gum arabic, and a polymer, for example, polyvinylidene chloride, poly(mth)acrylonitrile, polysulfone, polyvinyl chloride, polyethylene, polycarbonate, polystyrene, polyamide or cellophane are exemplified. The polymers may be used in combination of two or more thereof, if desired.

As a relatively useful material for use in the protective layer, a water-soluble polymer compound excellent in crystallinity is exemplified. Specifically, polyvinyl alcohol, polyvinyl pyrrolidone, polyvinyl imidazole, a water-soluble acrylic resin, for example, polyacrylic acid, gelatin or gum arabic is preferably used. Above all, polyvinyl alcohol, polyvinyl pyrrolidone and polyvinyl imidazole are more preferably used from the standpoint of capability of coating with water as a solvent and easiness of removal with dampening water at printing. Among them, polyvinyl alcohol (PVA) provides most preferable results on the fundamental properties, for example, oxygen blocking property or removability with development.

The polyvinyl alcohol for use in the protective layer according to the invention may be partially substituted with ester, ether or acetal as long as it contains a substantial amount of unsubstituted vinyl alcohol units necessary for maintaining water solubility. Also, the polyvinyl alcohol may partially contain other copolymerization components. For instance, polyvinyl alcohols of various polymerization degrees having at random a various kind of hydrophilic modified cites, for example, an anion-modified cite modified with an anion, e.g., a carboxy group or a sulfo group, a cation-modified cite modified with a cation, e.g., an amino group or an ammonium group, a silanol-modified cite or a thiol-modified cite, and polyvinyl alcohols of various polymerization degrees having at the terminal of the polymer having a various kind of modified cites, for example, the above-described anion-modified cite, cation modified cite, silanol-modified cite or thiol-modified cite, an alkoxy-modified cite, a sulfide-modified cite, an ester modified cite of vinyl alcohol with a various kind of organic acids, an ester modified cite of the above-described anion-modified cite with an alcohol or an epoxy-modified cite are also preferably used.

Preferable examples of the polyvinyl alcohol include those having a hydrolysis degree of 71 to 100% and a polymerization degree of 300 to 2,400. Specific examples of the polyvinyl alcohol include PVA-105, PVA-110, PVA-117, PVA-117H, PVA-120, PVA-124, PVA-124H, PVA-CS, PVA-CST, PVA-HC, PVA-203, PVA-204, PVA-205, PVA-210, PVA-217, PVA-220, PVA-224, PVA-217EE, PVA-217E, PVA-220E, PVA-224E, PVA-405, PVA-420, PVA-613 and L-8 all produced by Kuraray Co., Ltd. Specific examples of the modified polyvinyl alcohol include that having an anion-modified cite, for example, KL-318, KL-118, KM-618, KM-118 or SK-5102, that having a cation-modified cite, for example, C-318, C-118 or CM-318, that having a terminal thiol-modified cite, for example, M-205 or M-115, that having a terminal sulfide-modified cite, for example, MP-103, MP-203, MP-102 or MP-202, that having an ester-modified cite with a higher fatty acid at the terminal, for example, HL-12E or HL-1203 and that having a reactive silane-modified cite, for example, R-1130, R-2105 or R-2130.

It is also preferable that the protective layer contains a stratiform compound. The stratiform compound is a particle having a thin tabular shape and includes, for instance, mica, for example, natural mica represented by the following formula: A (B, C)₂₋₅ D₄ O₁₀ (OH, F, O)₂, (wherein A represents any one of Li, K, Na, Ca, Mg and an organic cation, B and C each represents any one of Fe (II), Fe(III), Mn, Al, Mg and V, and D represents Si or Al) or synthetic mica; talc represented by the following formula: 3MgO·4SiO·H₂O; teniolite; montmorillonite; saponite; hectolite; and zirconium phosphate.

Examples of the natural mica include muscovite, paragonite, phlogopite, biotite and lepidolite. Examples of the synthetic mica include non-swellable mica, for example, fluorphlogopite KMg₃(AlSi₃O₁₀)F₂ or potassium tetrasilic mica KMg_{2.5}(Si₄O₁₀)F₂, and swellable mica, for example, Na tetrasililic mica NaMg_{2.5}(Si₄O₁₀)F₂, Na or Li teniolite (Na, Li)Mg₂Li(Si₄O₁₀)F₂, or montmorillonite based Na or Li hectolite (Na, Li)_{1/8}Mg_{2/5}Li_{1/8}(Si₄O₁₀)F₂. Synthetic smectite is also useful.

Of the stratiform compounds, fluorine-based swellable mica, which is a synthetic stratiform compound, is particularly useful in the invention. Specifically, the swellable synthetic mica and an swellable clay mineral, for example, montmorillonite, saponite, hectolite or bentonite have a stratiform structure comprising a unit crystal lattice layer having thickness of approximately 10 to 15 angstroms, and metallic atom substitution in the lattices thereof is remarkably large in comparison with other clay minerals. As a result, the lattice layer results in lack of positive charge and to compensate it, a cation, for example, Li⁺, Na⁺, Ca²⁺, Mg²⁺ or an organic cation, e.g., an amine salt, a quaternary ammonium salt, a phosphonium salt or a sulfonium salt is adsorbed between the lattice layers. The stratiform compound greatly swells upon contact with water. When share is applied under such condition, the stratiform crystal lattices are easily cleaved to form a stable sol in water. The bentnite and swellable synthetic mica have strongly such tendency.

With respect to the shape of the stratiform compound, the thinner the thickness or the larger the plain size as long as smoothness of coated surface and transmission of actinic radiation are not damaged, the better from the standpoint of control of diffusion. Therefore, an aspect ratio of the stratiform compound is ordinarily 20 or more, preferably 100 or more, and particularly preferably 200 or more. The aspect ratio is a ratio of thickness to major axis of particle and can be determined, for example, from a projection drawing of particle by a microphotography. The larger the aspect ratio, the greater the effect obtained.

As for the particle diameter of the stratiform compound, an average diameter is ordinarily from 1 to 20 µm, preferably from 1 to 10 µm, and particularly preferably from 2 to 5 µm. When the particle diameter is less than 1 µm, the inhibition of permeation of oxygen or moisture is insufficient and the effect of the stratiform compound can not be satisfactorily achieved. On the other hand, when it is larger than 20 µm, the dispersion stability of the particle in the coating solution is insufficient to cause a problem in that stable coating can not be performed. An average thickness of the particle is ordinarily 0.1 µm or less, preferably 0.05 µm or less, and particularly preferably 0.01 µm or less. For example, with respect to the swellable synthetic mica that is the representative compound of the stratiform compounds, the thickness is approximately from 1 to 50 nm and the plain size is approximately from 1 to 20 µm.

When such a stratiform compound particle having a large aspect ratio is incorporated into the protective layer, strength of the coated layer increases and penetration of oxygen or moisture can be effectively inhibited so that the protective layer can be prevented from deterioration due to deformation, and even when the lithographic printing plate precursor is preserved for a long period of time under a high humidity condition, it is prevented from decrease in the image-forming property thereof due to the change of humidity and exhibits excellent preservation stability.

An amount of the stratiform compound contained in the protective layer is ordinarily from 5/1 to 1/100 in terms of a weight ratio of the stratiform compound to an amount of a binder used in the protective layer. When a plural kind of the stratiform compounds is used together, it is preferred that the total amount of the stratiform compounds is in the range of weight ratio described above.

As other composition for the protective layer, glycerol, dipropylene glycol or the like can be added in an amount corresponding to several % by weight of the (co)polymer to impart flexibility. Further, an anionic surfactant, for example, sodium alkyl sulfate or sodium alkyl sulfonate; an amphoteric surfactant, for example, alkylamino carboxylic acid salt or alkylamino dicarboxylic acid salt; or a non-ionic surfactant, for example, polyoxyethylene alkyl phenyl ether can be added. An amount of the surfactant added is from 0.1 to 100% by weight of the (co)polymer.

Further, for the purpose of improving the adhesion to the image-recording layer, for example, it is described in JP-A-49-70702 and BP-A-1303578 that sufficient adhesion can be obtained by mixing from 20 to 60% by weight of an acrylic emulsion, a water-insoluble vinyl pyrrolidone-vinyl acetate copolymer or the like in a hydrophilic polymer mainly comprising polyvinyl alcohol and coating the mixture on the image-recording layer. In the invention, any of such known techniques can be used.

Further, other functions can also be provided to the protective layer. For instance, by adding a coloring agent (for example, a water-soluble dye), which is excellent in permeability for infrared ray used for the exposure and capable of efficiently absorbing light at other wavelengths, a safe light adaptability can be improved without causing decrease in the sensitivity.

An example of common dispersing method for the stratiform compound used in the protective layer is described below. Specifically, from 5 to 10 parts by weight of a swellable stratiform compound that is exemplified as a preferred stratiform compound is added to 100 parts by weight of water to adapt the compound to water and to be swollen, followed by dispersing using a dispersing machine. The dispersing machine used include, for example, a variety of mills conducting dispersion by directly applying mechanical power, a high-speed agitation type dispersing machine providing a large shear force and a dispersion machine providing ultrasonic energy of high intensity. Specific examples thereof include a ball mill, a sand a grinder mill, a visco mill, a colloid mill, a homogenizer, a dissolver, a polytron, a homomixer, a homoblender, a keddy mill, a jet agitor, a capillary type emulsifying device, a liquid siren, an electromagnetic strain type ultrasonic generator and an emulsifying device having Polman whistle. A dispersion containing from 5 to 10% by weight of the stratiform compound thus prepared is highly viscous or gelled and exhibits extremely good preservation stability. In the formation of a coating solution for protective layer using the dispersion, it is preferred that the dispersion is diluted with water, sufficiently stirred and then mixed with a binder solution.

To the coating solution for protective layer can be added known additives, for example, an anionic surfactant, a nonionic surfactant, a cationic surfactant or a fluorine-based surfactant for improving coating property or a water-soluble plasticizer for improving physical property of the coated layer. Examples of the water-soluble plasticizer include propionamide, cyclohexanediol, glycerin or sorbitol. Also, a water-soluble (meth)acrylic polymer can be added. Further, to the coating solution may be added known additives for increasing adhesion to the image-recording layer or for improving time-lapse stability of the coating solution.

The coating solution for protective layer thus-prepared is coated on the image-recording layer provided on the support and then dried to form a protective layer. The coating solvent may be appropriately selected in view of the binder used, and when a water-soluble polymer is used, distilled water or purified water is preferably used as the solvent. A coating method of the protective layer is not particularly limited, and known methods, for example, methods described in U.S. Patent 3,458,311 and JP-B-55-49729 can be utilized. Specific examples of the coating method for the protective layer include a blade coating method, an air knife coating method, a gravure coating method, a roll coating method, a spray coating method, a dip coating method and a bar coating method.

A coating amount of the protective layer is preferably in a range from 0.01 to 10 g/m², more preferably in a range from 0.02 to 3 g/m², and most preferably in a range from 0.02 to 1 g/m² in terms of the coating amount after drying.

### [Exposure]

As a light source for exposure of the lithographic printing plate precursor according to the invention, known light sources can be used without limitation. A preferred wavelength of the light source is from 300 to 1,200 nm. Specifically, various kinds of lasers preferably used as the light source, and among them, a semiconductor laser emitting an infrared ray having a wavelength of 760 to 1,200 nm is preferably used.

The exposure mechanism used may be any of inner surface drum type, outer surface drum type and flat bed type can be used.

Further, other exposure light sources used for the lithographic printing plate precursor according to the invention include, for example, a super-high pressure, high pressure, medium pressure or low pressure mercury lamp, a chemical lamp, a carbon arc lamp, a xenon lamp, a metal halide lamp, a variety of visible or ultraviolet laser lamps, a fluorescent lamp, a tungsten lamp and sunlight.

### [Printing method]

In the lithographic printing method according to the invention, the lithographic printing plate precursor of the invention is exposed imagewise by an infrared laser and then without undergoing the development processing step, to the lithographic printing plate precursor are supplied oily ink and an aqueous component to perform printing.

More specifically, there are illustrated a method wherein the lithographic printing plate precursor is exposed by an infrared laser and without undergoing the development processing step, mounted on a printing machine to perform printing and a method wherein the lithographic printing plate precursor is mounted on a printing machine, exposed by an infrared laser on the printing machine to perform printing without undergoing the development processing step.

After the imagewise exposure of the lithographic printing plate precursor by an infrared laser, when an aqueous component and oily ink are supplied to perform printing without undergoing the development processing step, for example, a wet development processing step, in the exposed area of the image-recording layer, the image-recording layer hardened by the exposure forms the oily ink receptive area having an oleophilic surface. On the other hand, in the unexposed area, the unhardened image-recording layer is removed by dissolution or dispersion with the aqueous component and/or oily ink supplied to reveal a hydrophilic surface of support in the area.

As a result, the aqueous component is adhered on the revealed hydrophilic surface, the oily ink is adhered to the exposed area of the image-recording layer, and thus printing is initiated. While either the aqueous component or the oily ink may be supplied at first to the plate surface, it is preferred to supply the oily ink at first in view of preventing the aqueous component from contamination with the image-recording layer in the unexposed area. For the aqueous component and oily ink, dampening water and printing ink for conventional lithographic printing are used respectively.

Thus, the lithographic printing plate precursor is subjected to the on-machine development on an offset printing machine and used as it is for printing a large number of sheets.

### EXAMPLES

The present invention will be described in more detail with reference to the following examples, but the invention should not be construed as being limited thereto.

### Synthesis Example 1: Synthesis of Specific Cyanine Dyes (Compound (IR-32)) and (Compound (IR-26))

A mixture of 37.9 g of 3-methoxypropanol and 53.9 g of p-toluenesulfonylchloride in 50.2 g of pyridine was stirred for 3 hours while maintaining the reaction temperature from 0 to 10°C and then extracted with ethyl acetate to obtain 91.2 g (yield 89%) of 3-methoxypropyl tosylate.

A mixture of 55 g of 3-methoxypropyl tosylate thus-obtained and 39.0 g of 2,3,3,5-tetramethyl-3-H-indole was stirred for 3 hours at 120°C, and allowed to cool to room temperature. Then, 47.7 g of 2,5-bis[(phenylamino)methylene]cyclopentylidenediphenylaminium tetrafluoroborate, 23.0 g of acetic anhydride, 56.9 g of triethylamine and 220 ml of 2-propanol were added thereto and the mixture was stirred for 3 hours at 80°C. After the completion of the reaction, the mixture was allowed to cool to room temperature and 90 ml of water was added thereto. The crystals thus-deposited were collected by filtration and washed thoroughly with water to obtain 60.1 g (yield 80%) of Specific Cyanine Dye (IR-32).

In 90 ml of acetonitrile was dissolved 15.0 g of Specific Cyanine Dye (IR-32) thus-obtained and the solution was added dropwise to an aqueous solution containing 6.6 g of KPF₆ and 90 g of water at room temperature over a period of 15 minutes. After the completion of the dropwise addition, the mixture was stirred for 2 hours. Then, the crystals thus-deposited were collected by filtration and dried to obtain 15.2 g (yield 95%) of Specific Cyanine Dye (IR-26).

The synthesis scheme is shown below.

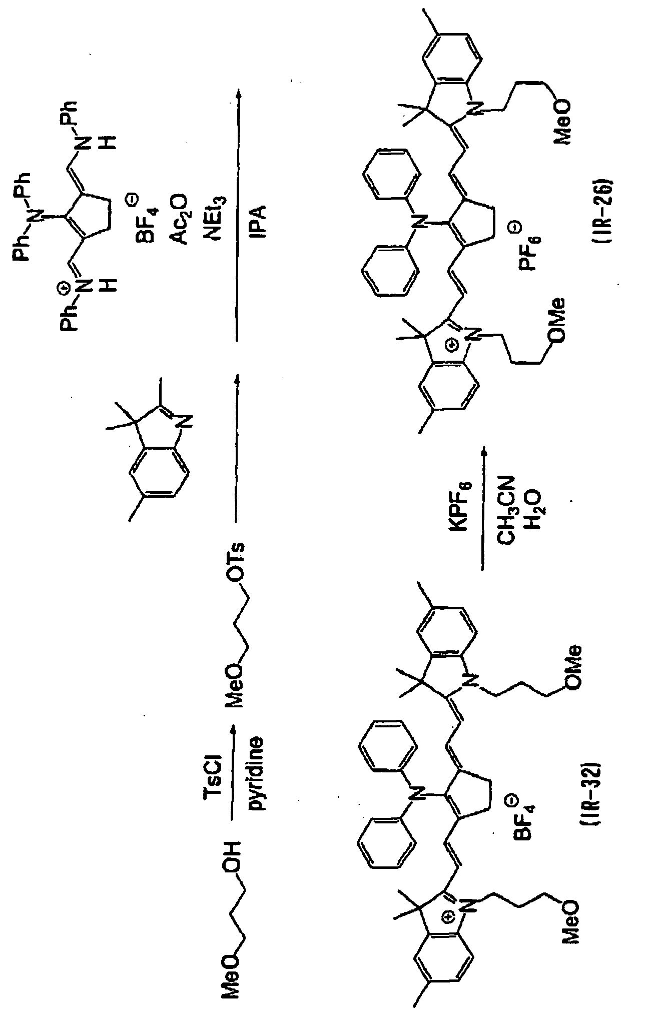

With Specific Cyanine Dye (IR-32) and Specific Cyanine Dye (IR-26) thus-obtained, the identification thereof was conducted by electron absorption spectrum, ¹H-NMR (solvent: DMSO) and ¹⁹F-NMR (solvent: DMSO).
Specific Cyanine Dye (IR-32)
Melting point: 183°C
Electron absorption spectrum (acetonitrile): absorption maximum wavelength: 804 nm; absorption maximum molar extinction coefficient: 264,000
¹H-NMR (400 MHz, DMSO-d6) δ 7.434-8.70 (m,18H), 5.846 (d, J=13.6 Hz, 2H), 4.046 (t, J=5.6 Hz, 4H), 3.313 (t, J=5.6 Hz, 4H), 3.197 (s, 6H), 2.879 (s, 4H), 2.298 (s, 6H), 1.894 (m, 4H), 1.102 (s, 12H)
¹⁹F-NMR (100 MHz, DMSO-d6) 8 148.23 (s)
Specific Cyanine Dye (IR-26)
Melting point: 207°C
Electron absorption spectrum (acetonitrile): absorption maximum wavelength: 804 nm; absorption maximum molar extinction coefficient: 264,000
¹H-NMR (400 MHz, DMSO-d6) δ 7.434-8.70 (m,18H), 5.846 (d, J=13.6 Hz, 2H), 4.046 (t, J=5.6 Hz, 4H), 3.313 (t, J=5.6 Hz, 4H), 3.197 (s, 6H), 2.879 (s, 4H), 2.298 (s, 6H), 1.894 (m, 4H), 1.102 (s, 12H)
¹⁹F-NMR (100 MHz, DMSO-d6) δ 69.19 (s, 3F), 71.08 (s, 3F)

### Synthesis Example 2: Synthesis of Specific Cyanine Dye (Compound (IR-2))

A mixture of 290 g 2-[2-(2-methoxyethoxy)ethoxy]ethyl tosylate and 79 g of 2,3,3,5-tetramethyl-3-H-indole was stirred for 3 hours at 120°C, and allowed to cool to room temperature. Then, 120.4 g of 2,5-bis[(phenylamino)methylene]cyclopentylidenediphenylaminium tetrafluoroborate, 46.5 g of acetic anhydride, 115.1 g of triethylamine and 1.1 liter of 2-propanol were added thereto and the mixture was stirred for 3 hours at 80°C. After the completion of the reaction, the mixture was allowed to cool to room temperature and 1.5 liters of DMAc was added thereto. The reaction solution was added dropwise to a mixed solution containing 2.2 kg of KPF₆, 6 liters of DMAc and 24 liter of water. Then, the crystals thus-deposited were collected by filtration and washed thoroughly with water to obtain 195.7 g (yield 85%) of Specific Cyanine Dye (IR-2).

With Specific Cyanine Dye (IR-2) thus-obtained, the identification thereof was conducted by electron absorption spectrum, ¹H-NMR (solvent: DMSO) and ¹⁹F-NMR (solvent: DMSO).
Melting point: 68°C
Electron absorption spectrum (acetonitrile): absorption maximum wavelength: 805 nm; absorption maximum molar extinction coefficient: 191,000
¹H-NMR (400 MHz, DMSO-d6) δ 7.434-8.70 (m,18H), 5.907 (d, J=14.0 Hz, 2H), 4.211 (t, J=5.6 Hz, 4H), 3.707 (t, J=5.6 Hz, 4H), 3.505-3.313 (m, 2H), 3.195 (s, 6H), 2.874 (s, 4H), 2.295 (s, 6H), 1.100 (s, 12H)
¹⁹F-NMR(100 MHz, DMSO-d6) δ 69.18 (s, 3F), 71.07 (s, 3F)

### EXAMPLE 1

### <Preparation of aluminum support>

An aluminum plate (material: JIS 1050) having a thickness of 0.3 mm was subjected to a degreasing treatment at 50°C for 30 seconds using a 10% by weight aqueous sodium aluminate solution in order to remove rolling oil on the surface thereof and then grained the surface thereof using three nylon brushes embedded with bundles of nylon bristle having a diameter of 0.3 mm and an aqueous suspension (specific gravity: 1.1 g/cm³) of pumice having a median size of 25 µm, followed by thorough washing with water. The plate was etched by immersing in a 25% by weight aqueous sodium hydroxide solution of 45°C for 9 seconds, washed with water, then immersed in a 20% by weight aqueous nitric acid solution at 60°C for 20 seconds, and washed with water. The etching amount of the grained surface was about 3 g/m².

Then, using an alternating current of 60 Hz, an electrochemical roughening treatment was continuously carried out on the plate. The electrolyte used was a 1% by weight aqueous nitric acid solution (containing 0.5% by weight of aluminum ion) and the electrolyte temperature was 50°C. The electrochemical roughening treatment was conducted using an alternating current source, which provides a rectangular alternating current having a trapezoidal waveform such that the time TP necessary for the current value to reach the peak from zero was 0.8 msec and the duty ratio was 1:1, and using a carbon electrode as a counter electrode. A ferrite was used as an auxiliary anode. The current density was 30 A/dm² in terms of the peak value of the electric current, and 5% of the electric current flowing from the electric source was divided to the auxiliary anode. The quantity of electricity in the nitric acid electrolysis was 175 C/dm² in terms of the quantity of electricity when the aluminum plate functioned as an anode. The plate was then washed with water by spraying.

The plate was further subjected to an electrochemical roughening treatment in the same manner as in the nitric acid electrolysis above using as an electrolyte, a 0.5% by weight aqueous hydrochloric acid solution (containing 0.5% by weight of aluminum ion) having temperature of 50°C and under the condition that the quantity of electricity was 50 C/dm² in terms of the quantity of electricity when the aluminum plate functioned as an anode. The plate was then washed with water by spraying. The plate was subjected to an anodizing treatment using as an electrolyte, a 15% by weight aqueous sulfuric acid solution (containing 0.5% by weight of aluminum ion) at a current density of 15 A/dm² to form a direct current anodized film of 2.5 glm², washed with water and dried. The plate was treated with a 2.5% by weight aqueous sodium silicate solution at 30°C for 10 seconds. The center line average roughness (Ra) of the support was measured using a stylus having a diameter of 2 µm and it was found to be 0.51 µm.

Undercoat solution (1) shown below was coated on the aluminum plate described above so as to have a dry coating amount of 10 mg/m² to prepare a support for using in the experiments described below.

### Undercoat solution (1)

| | |
|---|---|
| Undercoat compound (1) shown below | 0.017 g |
| (Mw: 40,000) | |
| Methanol | 9.00 g |
| Water | 1.00 g |

Undercoat compound (1):

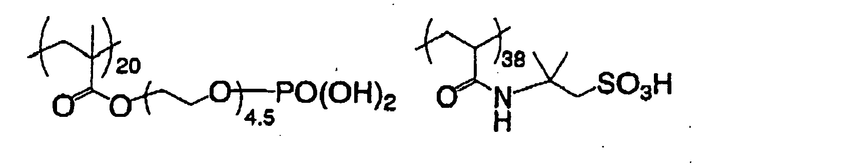

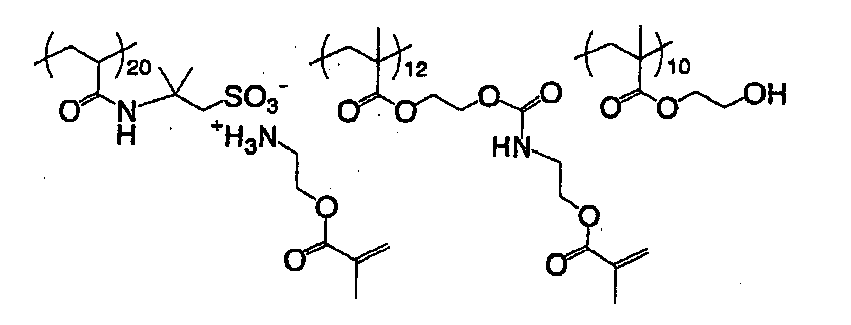

### <Formation of image-recording layer and protective layer>

Coating solution (1) for image-recording layer having the composition shown below was coated on the above-described support by a bar and dried in an oven at 100°C for 60 seconds to form an image-recording layer having a dry coating amount of 1.0 g/m². Subsequently, Coating solution for protective layer having the composition shown below was coated on the image-recording layer by a bar and dried in an oven at 120°C for 60 seconds to form a protective layer having a dry coating amount of 0.15 g/m², thereby preparing a lithographic printing plate precursor.

Coating solution (1) for image-recording layer was prepared by mixing Photosensitive solution (1) shown below with Microgel solution (1) shown below just before the coating, followed by stirring.

### Photosensitive solution (1)

| | |
|---|---|
| Binder polymer (1) shown below | 0.162 g |
| | |
| Polymerization initiator (1) shown below | 0.100 g |
| | |
| Infrared absorbing agent (1) shown below | 0.020 g |
| | |
| Polymerizable monomer (Aronics M-215, produced by Toagosei Co., Ltd.) | 0.385 g |
| | |
| Fluorine-based surfactant (1) shown below | 0.044 g |
| | |
| MEK | 1.091 g |
| | |
| MFG | 8.609 g |

### Microgel solution (1)

| | |
|---|---|
| Microgel (1) prepared described below | 2.640 g |
| | |
| Water | 2.425 g |

### Binder polymer (1):

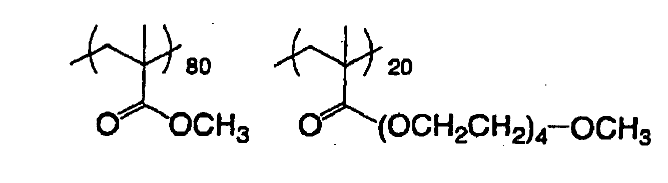

### Polymerization initiator (1):

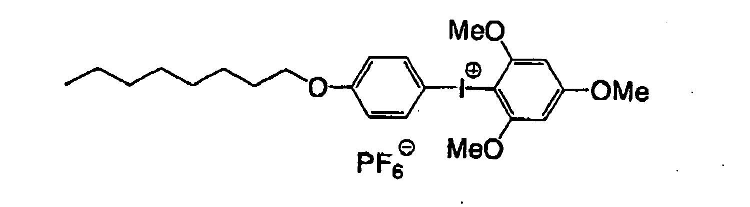

### Infrared absorbing agent (1):

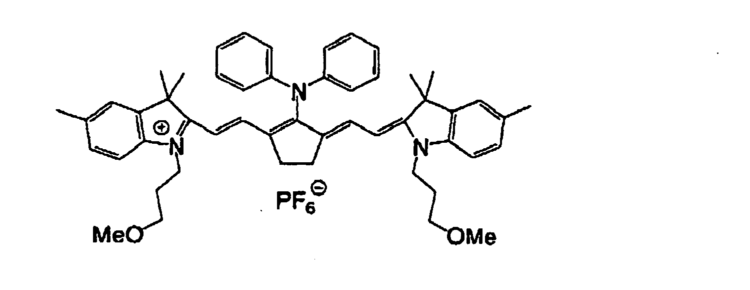

### Fluorine-based surfactant (1):

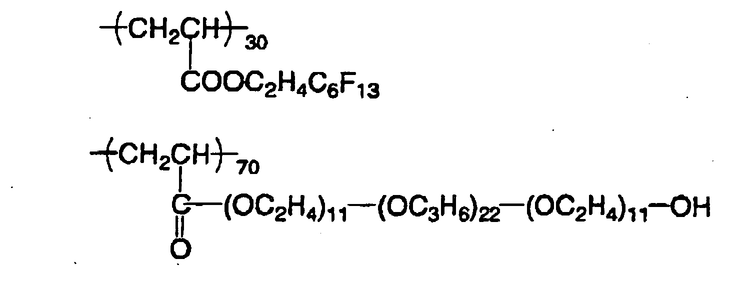

### Coating solution for protective layer

| | |
|---|---|
| Dispersion of inorganic particle (1) shown below | 1.5 g |
| | |
| Polyvinyl alcohol (PVA-105, saponification degree: 98.5 % by mole, polymerization degree: 500, produced by Kuraray Co., Ltd.) | 0.06 g |
| | |
| Polyvinylpyrrolidone (K30, molecular weight Mw: 40,000, produced by Tokyo Chemical Industry Co., Ltd.) | 0.01 g |
| | |
| Copolymer of vinylpyrrolidone and vinyl acetate (LUVITEC VA64W, copolymerization ratio = 6/4, produced by ISP Co., Ltd.) | 0.01 g |
| | |
| Nonionic surfactant (EMALEX 710, produced by Nihon-Emulsion Co., Ltd.) | 0.01 g |
| | |
| Ion-exchanged water | 6.0 g |

### Preparation of Microgel (1)

An oil phase component was prepared by dissolving 10 g of adduct of trimethylol propane and xylene diisocyanate (Takenate D-110N, produced by Mitsui Takeda Chemical Co., Ltd.), 3.15 g of pentaerythritol triacrylate (SR444, produced by Nippon Kayaku Co., Ltd.) and 0.1 g of Pionine A-41C (produced by Takemoto Oil and Fat Co., Ltd.) in 17 g of ethyl acetate. As an aqueous phase component, 40 g of a 4% by weight aqueous solution of PVA-205 was prepared. The oil phase component and the aqueous phase component were mixed and emulsified using a homogenizer at 12,000 rpm for 10 minutes. The resulting emulsion was added to 25 g of distilled water and stirred at room temperature for 30 minutes and then at 50°C for 3 hours. The thus obtained liquid was diluted using distilled water so as to have the solid concentration of 15% by weight to prepare Microgel (1). The average particle size of the particle in Microgel (1) was 0.2 µm.

### Preparation of Dispersion of inorganic particle (1)

To 193.6 g of ion-exchanged water was added 6.4 g of synthetic mica (Somasif ME-100, produced by CO-OP Chemical Co., Ltd.) and the mixture was dispersed using a homogenizer until an average particle size (according to a laser scattering method) became 3 µm to prepare Dispersion of inorganic particle (1). An aspect ratio of the inorganic particle thus-dispersed was 100 or more.

### EXAMPLE 2

A lithographic printing plate precursor was prepared in the same manner as in Example 1 except for changing Infrared absorbing agent (1) used in Example 1 to Infrared absorbing agent (2) shown below.

### EXAMPLE 3

A lithographic printing plate precursor was prepared in the same manner as in Example 1 except for changing Infrared absorbing agent (1) used in Example 1 to Infrared absorbing agent (3) shown bellow.

### EXAMPLE 4

A lithographic printing plate precursor was prepared in the same manner as in Example 1 except for changing Infrared absorbing agent (1) used in Example 1 to Infrared absorbing agent (4) shown below.

### Infrared absorbing agent (2):

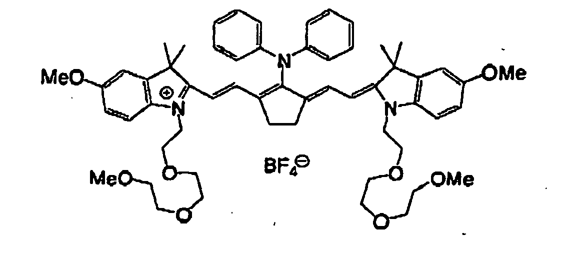

### Infrared absorbing agent (3):

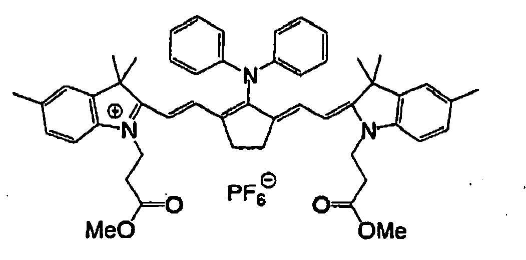

### Infrared absorbing agent (4):

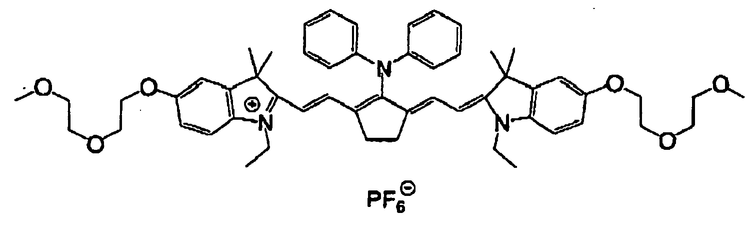

### EXAMPLE 5

A lithographic printing plate precursor was prepared in the same manner as in Example 1 except for changing Polymerization initiator (1) used in Example 1 to Polymerization initiator (2) shown below.

### Polymerization initiator (2):

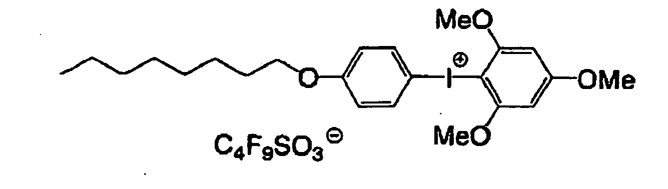

### Polymerization initiator (3)

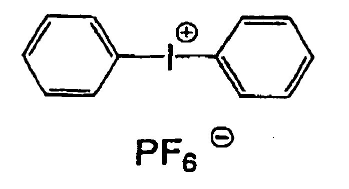

### EXAMPLE 6

A lithographic printing plate precursor was prepared in the same manner as in Example 1 except for changing Infrared absorbing agent (1) used in Example 1 to Infrared absorbing agent (5) shown below and Polymerization initiator (1) used in Example 1 to Polymerization initiator (2) shown above.

### EXAMPLE 7

A lithographic printing plate precursor was prepared in the same manner as in Example 1 except for changing Polymerization initiator (1) used in Example 1 to Polymerization initiator (3) shown above.

### EXAMPLE 8

Coating solution (2) for image-recording layer having the composition shown below was coated on the above-described support by a bar and dried in an oven at 100°C for 60 seconds to form an image-recording layer having a dry coating amount of 1.0 g/m². Subsequently, a protective layer was formed in the same manner as in Example 1, thereby preparing a lithographic printing plate precursor.

### Coating solution (2) for image-recording layer

| | |
|---|---|
| Infrared absorbing agent (1) shown above | 0.05 g |
| | |
| Polymerization initiator (4) shown below | 0.20 g |
| Binder polymer (2) shown below (average molecular weight: 80,000) | 0.50 g |
| | |
| Polymerizable monomer (Aronics M-215, produced by Toa Gosei Co., Ltd.) | 1.00 g |
| | |
| Naphthalenesulfonate salt of Victoria Pure Blue | 0.02 g |
| | |
| Fluorine-based surfactant (1) shown above | 0.10 g |
| | |
| Methyl ethyl ketone | 18.0 g |

### Polymerization initiator (4):

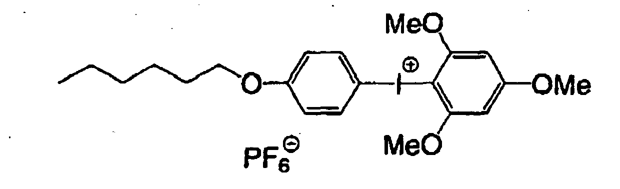

### Binder polymer (2):

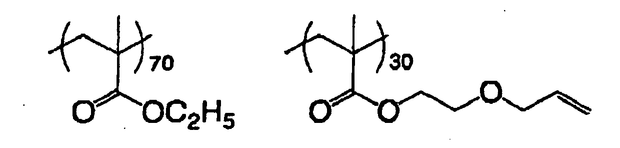

### EXAMPLE 9

A lithographic printing plate precursor was prepared in the same manner as in Example 8 except for changing Infrared absorbing agent (1) used in Example 8 to Infrared absorbing agent (2) shown above.

### EXAMPLE 10

A lithographic printing plate precursor was prepared in the same manner as in Example 8 except for changing Infrared absorbing agent (1) used in Example 8 to Infrared absorbing agent (3) shown above.

### EXAMPLE 11

A lithographic printing plate precursor was prepared in the same manner as in Example 8 except for changing Infrared absorbing agent (1) used in Example 8 to Infrared absorbing agent (4) shown above.

### EXAMPLE 12

A lithographic printing plate precursor was prepared in the same manner as in Example 8 except for changing Polymerization initiator (4) used in Example 8 to Polymerization initiator (2) shown above.

### EXAMPLE 13

A lithographic printing plate precursor was prepared in the same manner as in Example 8 except for changing Infrared absorbing agent (1) used in Example 8 to Infrared absorbing agent (5) shown above and Polymerization initiator (4) used in Example 8 to Polymerization initiator (2) shown above.

### EXAMPLE 14

A lithographic printing plate precursor was prepared in the same manner as in Example 8 except for changing Polymerization initiator (4) used in Example 8 to Polymerization initiator (3) shown above.

### EXAMPLE 15

Coating solution (3) for image-recording layer having the composition shown below was coated on the above-described support by a bar and dried in an oven at 100°C for 60 seconds to form an image-recording layer having a dry coating amount of 1.0 g/m². Subsequently, a protective layer was formed in the same manner as in Example 1, thereby preparing a lithographic printing plate precursor.

Coating solution (3) for image-recording layer was prepared by mixing Photosensitive solution (2) shown below with Microcapsule solution (1) shown below just before the coating, followed by stirring.

### Photosensitive solution (2)

| | |
|---|---|
| Binder polymer (1) shown above | 0.162 g |
| | |
| Polymerization initiator (1) shown above | 0.100 g |
| | |
| Infrared absorbing agent (1) shown above | 0.020 g |
| | |
| Polymerizable monomer (Aronics M-215, produced by Toagosei Co., Ltd.) | 0.385 g |
| | |
| Fluorine-based surfactant (1) shown above | 0.044 g |
| | |
| MEK | 1.091 g |
| | |
| MFG | 8.609 g |

### Microcapsule solution (1)

| | |
|---|---|
| Microcapsule (1) prepared described below | 2.640 g |
| | |
| Water | 2.425 g |

### Preparation of Microcapsule (1)

An oil phase component was prepared by dissolving 10 g of adduct of trimethylol propane and xylene diisocyanate (Takenate D-110N, produced by Mitsui Takeda Chemical Co., Ltd., 75% ethyl acetate solution), 6.00 g of Aronix M-215 (produced by Toagosei Co., Ltd.) and 0.12 g of Pionine A-41C (produced by Takemoto Oil and Fat Co., Ltd.) in 16.67 g of ethyl acetate. As an aqueous phase component, 37.5 g of a 4% by weight aqueous solution of PVA-205 was prepared. The oil phase component and the aqueous phase component were mixed and emulsified using a homogenizer at 12,000 rpm for 10 minutes. The resulting emulsion was added to 25 g of distilled water and stirred at a room temperature for 30 minutes and then at 40°C for 2 hours. The thus obtained microcapsule liquid was diluted using distilled water so as to have the solid concentration of 15% by weight to prepare Microcapsule (1). The average particle size of the particle in Microcapsule (1) was 0.2 µm.

### COMPARATIVE EXAMPLE 1

A lithographic printing plate precursor was prepared in the same manner as in Example 1 except for changing Infrared absorbing agent (1) used in Example 1 to Infrared absorbing agent (5) shown below.

### Infrared absorbing agent (5):

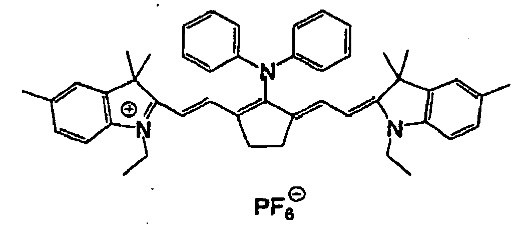

### COMPARATIVE EXAMPLE 2

A lithographic printing plate precursor was prepared in the same manner as in Example 8 except for changing Infrared absorbing agent (1) used in Example 8 to Infrared absorbing agent (5) shown above.

### 2. Exposure and Printing

Each of the lithographic printing plate precursors thus-obtained was exposed by Trendsetter 3244VX, produced by Creo Co., equipped with a water-cooled 40 W infrared semiconductor laser under the conditions of power of 9 W, a rotational number of an outer surface drum of 210 rpm and resolution of 2,400 dpi. The exposed lithographic printing plate precursor was mounted on a plate cylinder of a printing machine (SOR-M, produced by Heidelberg Co.) without conducting development processing. After supplying dampening water [EU-3 (etching solution, produced by Fuji Photo Film Co., Ltd.)/water/isopropyl alcohol = 1/89/10 (volume ratio)] and ink (TRANS-G (N) black ink (produced by Dainippon Ink and Chemicals, Inc.), 100 sheets of printing was conducted at a printing speed of 6,000 sheets per hour.

A number of printing papers required until on-machine development of the unexposed area of the image-recording layer on the printing machine was completed to reach a state where the ink was not transferred to the printing paper in the non-image area was determined to evaluate the on-machine development property. As a result, printed materials free from stain in the non-image area were obtained after the printing of 100 sheets in the case of using any of the lithographic printing plate precursors.

### 3. Evaluation

With each of the lithographic printing plate precursors obtained, evaluations shown below were conducted. The results obtained are shown in Table 1 below.

### (1) Depositing property of infrared absorbing agent in coating solution

The coating solution for image-recording layer was prepared and stirred for 30 minutes. Then, a depositing property of the infrared absorbing agent was evaluated. The results obtained are shown in Table 1 below. In Table 1, a case wherein the infrared absorbing agent was not deposited is indicated by O and a case wherein the infrared absorbing agent was deposited is indicated by X.

### (2) Visibility

A test pattern was exposed on each of the lithographic printing plate precursors by Trendsetter 3244VX, produced by Creo Co., equipped with a water-cooled 40 W infrared semiconductor laser under the conditions of power of 9 W, a rotational number of an outer surface drum of 210 rpm and resolution of 2,400 dpi. Contrast between the unexposed area and the exposed area, that is, the visibility (viewability of the image) was evaluated. The results obtained are shown in Table 1 below.

### (3) On-machine development property

The printing was conducted in the manner described above and a number of printing papers required for obtaining a printed material free from ink stain in the non-image area on the printing paper was determined and designated as a number of sheets for on-machine development. As the number of the sheets is smaller, the on-machine development property is better. The results obtained are shown in Table 1 below.

### (4) Printing durability

After the printing for the evaluation of on-machine development property as described above, the printing was further continued. As increase in a number of printing sheets, the image-recording layer was gradually abraded to cause decrease in the ink receptivity, resulting in decrease of ink density on printing paper. A number of printed materials obtained until the ink density (reflection density) decreased by 0.1 from that at the initiation of printing was determined to evaluate the printing durability. The results obtained are shown in Table 1 below.

### (5) Coloration of dampening water

A work of printing 1,000 sheets under the same printing condition described above was repeatedly conducted using 10 lithographic printing plates, and thereafter, it was inspected whether the dampening water was colored. A case wherein the coloration of dampening water was not observed is indicated by O and a case wherein the coloration of dampening water was observed is indicated by X. The results obtained are shown in Table 1 below.

**TABLE 1**

| | Depositing Property of Infrared Absorbing Agent | Visibility | On-machine Development Property (sheets) | Printing Durability (sheets) | Coloration of Dampening Water |
|---|---|---|---|---|---|
| Example 1 | O | Extremely good | 30 sheets | 15,000 sheets | O |
| Example 2 | O | Good | 35 sheets | 14,000 sheets | O |
| Example 3 | O | good | 35 sheets | 14,000 sheets | O |
| Example 4 | O | Good | 35 sheets | 14,000 sheets | O |
| Example 5 | O | Good | 40 sheets | 13.000 sheets | O |
| Example 6 | O | Somewhat good | 40 sheets | 13.000 sheets | O |
| Example 7 | O | Good | 40 sheets | 13,000 sheets | O |
| Example 8 | O | Extremely good | 40 sheets | 14,000 sheets | O |
| Example 9 | O | Good | 45 sheets | 14,000 sheets | O |
| Example 10 | O | Good | 45 sheets | 14,000 sheets | O |
| Example 11 | O | Good | 45 sheets | 13,000 sheets | O |
| Example 12 | O | Good | 50 sheets | 12,000 sheets | O |
| Example 13 | O | Somewhat good | 50 sheets | 12,000 sheets | O |
| Example 14 | ○ | Good | 50 sheets | 12,000 sheets | O |
| Example 15 | O | Extremely good | 35 sheets | 14,000 sheets | O |
| Comparative Example 1 | X | - | - | - | - |
| Comparative Example 2 | O | Poor | 90 sheets | 10,000 sheets | O |

From the results shown in Table 1, it can be seen that the lithographic printing plate precursors according to the invention maintain excellent on-machine development property, are prevented from the deposition of the infrared absorbing agent in the coating solution and the coloration of dampening water, and exhibit excellent visibility by laser exposure. On the contrary, the lithographic printing plate precursors of Comparative Examples 1 and 2 using a known infrared absorbing agent are either difficult to carry out uniform coating due to the deposition of the infrared absorbing agent or inferior to the lithographic printing plate precursors according to the invention in all of the visibility, on-machine development property and printing durability, even if the uniform coating can be carried out.

This application is based on Japanese Patent application JP 2005-248493, filed August 29, 2005, and Japanese Patent application JP 2006-23118, filed January 31, 2006.

## Claims

1. A lithographic printing plate precursor comprising a support and an image-recording layer which contains a cyanine dye including a solvent-soluble group and having an absorption maximum in an infrared wavelength region and is capable of being removed with at least one of printing ink and an aqueous component, wherein the cyanine dye has the formula (i): 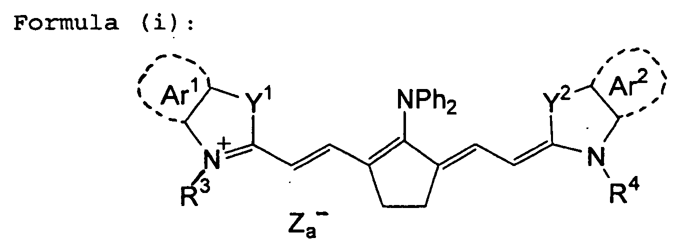 wherein
- Ar¹ and Ar², which may be the same or different, each represents an aromatic hydrocarbon group, which may have a substituent;
- Y¹ and Y², which may be the same or different, each represents a dialkylmethylene group having 12 or less carbon atoms;
- the solvent-soluble group is selected from an alkyloxy group, an aryloxy group, an ether group, an alkyloxycarbonyl group and an aryloxycarbonyl group and is attached to R³ and/or R⁴, wherein R³ and R⁴, which may be the same or different, each represents a hydrocarbon group having 20 or less carbon atoms, which may have a further substituent;
- Zₐ⁻ represents a counter ion which exists in case of being necessary for neutralizing a charge, the counter ion being a halogen ion, a tetrafluoroborate ion, a hexafluorophosphate ion or a sulfonate ion;
and wherein the image-recording layer further contains
- a diaryl iodonium salt including two or more electron donating groups as a polymerization initiator;
- a polymerizable compound; and
- a binder polymer.

2. The lithographic printing plate precursor as claimed in claim 1, wherein the solvent-soluble group included in the cyanine dye is an ether group or an alkyloxycarbonyl group.

3. The lithographic printing plate precursor as claimed in claim 1, wherein the counter ion of the diaryl iodonium salt is C₄F₉SO₃⁻.

4. The lithographic printing plate precursor as claimed in claim 1, wherein the cyanine dye is a compound including a salt structure comprising a cation and an anion and at least one of the anion included in the cyanine dye and the anion included in the polymerization initiator is an inorganic anion.

5. The lithographic printing plate precursor as claimed in any of the claims 1-4, wherein the image-recording layer further contains a microcapsule or a microgel.

6. A printing method comprising: a step of exposing imagewise the lithographic printing plate precursor as claimed in claim 1 with an infrared laser; and a printing step by supplying oily ink and an aqueous component to perform printing without carrying out any development processing of the lithographic printing plate precursor after the exposing, wherein an unexposed area with the infrared laser of the lithographic printing plate precursor is removed during the printing step.

## Patentansprüche

1. Lithografischer Druckplattenvorläufer, der einen Träger und eine Bildaufzeichnungsschicht umfasst, die einen Cyaninfarbstoff enthält, der eine Lösungsmittel-lösliche Gruppe beinhaltet, ein Absorptionsmaximum in einem infraroten Wellenlängenbereich hat, und geeignet ist, mit mindestens einem aus Drucktinte und einer wässrigen Komponente entfernt zu werden, worin der Cyaninfarbstoff die Formel (i) hat: 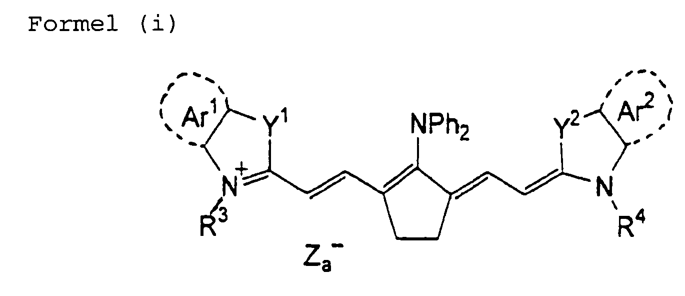 worin
- Ar¹ und Ar², die gleich oder unterschiedlich sein können, jeweils eine aromatische Kohlenwasserstoffgruppe darstellen, die einen Substituenten haben kann;
- Y¹ und Y², die gleich oder unterschiedlich sein können, jeweils eine Dialkylmethylengruppe mit 12 oder weniger Kohlenstoffatomen darstellen;
- die Lösungsmittel-lösliche Gruppe aus der Gruppe ausgewählt ist, die aus einer Alkyloxygruppe, einer Aryloxygruppe, einer Ethergruppe, einer Alkyloxycarbonylgruppe und einer Aryloxycarbonylgruppe besteht und an R³ und/oder R⁴ gebunden ist, worin R³ und R⁴, die gleich oder unterschiedlich sein können, jeweils eine Kohlenwasserstoffgruppe mit 20 oder weniger Kohlenstoffatomen darstellen, die einen weiteren Substituenten haben kann;
- Zₐ⁻ ein Gegenion darstellt, das vorhanden ist, falls es benötigt wird, um eine Ladung zu neutralisieren, wobei das Gegenion ein Halogenion, ein Tetrafluoroboration, ein Hexafluorophosphation oder ein Sulfonation ist;
und worin die Bildaufzeichnungsschicht weiterhin umfasst:
- ein Diaryljodoniumsalz, das zwei oder mehrere Elektronen-Donorgruppen enthält, als Polymerisationsinitiator;
- eine polymerisierbare Verbindung; und
- ein Binderpolymer.

2. Lithografischer Druckplattenvorläufer gemäß Anspruch 1, worin die im Cyaninfarbstoff enthaltene Lösungsmittel-lösliche Gruppe eine Ethergruppe oder eine Alkyloxycarbonylgruppe ist.

3. Lithografischer Druckplattenvorläufer gemäß Anspruch 1, worin das Gegenion des Diaryljodoniumsalzes C₄F₉SO₃⁻ist.

4. Lithografischer Druckplattenvorläufer gemäß Anspruch 1, worin der Cyaninfarbstoff eine Verbindung ist, die eine ein Kation und ein Anion umfassende Salzstruktur beinhaltet und mindestens eines aus dem im Cyaninfarbstoff enthaltenen Anion und dem im Polymerisationsinitiator enthaltenen Anion ein anorganisches Anion ist.

5. Lithografischer Druckplattenvorläufer gemäß mindestens einem der Ansprüche 1 bis 4, worin die Bildaufzeichnungsschicht weiterhin eine Mikrokapsel oder ein Mikrogel enthält.

6. Druckverfahren, umfassend: einen Schritt des bildweisen Belichtens des lithografischen Druckplattenvorläufers gemäß Anspruch 1, mit einem Infrarotlaser; und einen Druck-Schritt durch Bereitstellen einer öligen Tinte und einer wässrigen Komponente, um das Drucken durchzuführen, ohne nach dem Belichten irgendeinen Entwicklungs-Verarbeitungsschritt des lithografischen Druckplattenvorläufers durchzuführen, worin eine mit dem Infrarotlaser unbelichtete Fläche des lithografischen Druckplattenvorläufers während des Druckschrittes entfernt wird.

## Revendications

1. Précurseur de plaque d'impression lithographique comprenant un support et une couche d'enregistrement d'une image qui contient un colorant de cyanine comprenant un groupement soluble dans un solvant et présentant un maximum d'absorption dans une région des longueurs d'onde dans l'infrarouge, et peut être enlevée par au moins l'un parmi une encre d'impression et un composant aqueux, le colorant de cyanine présentant la formule (i) : 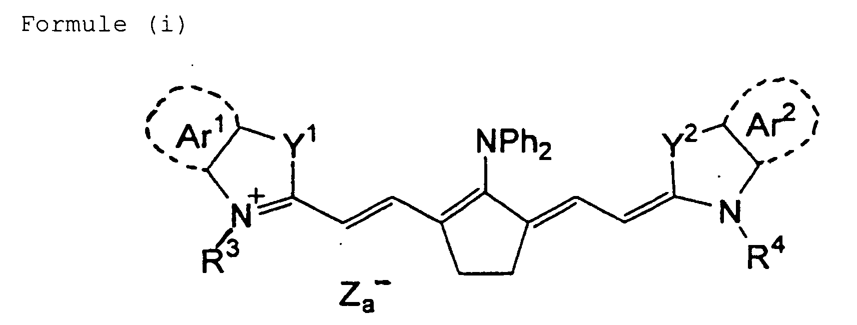 dans laquelle
- Ar¹ et Ar², qui peuvent être identiques ou différents, représentent chacun un groupement d'hydrocarbure aromatique qui peut porter un substituant,
- Y¹ et Y², qui peuvent être identiques ou différents, représentent chacun un groupement dialkylméthylène comptant 12 atomes de carbone ou moins,
- le groupement soluble dans un solvant est choisi parmi un groupement alkyloxy, un groupement aryloxy, un groupement éther, un groupement alkyloxycarbonyle et un groupement aryloxycarbonyle, et est attaché à R³ et/ou R⁴, R³ et R⁴, qui peuvent être identiques ou différents, représentant chacun un groupement d'hydrocarbure comptant 20 atomes de carbone ou moins, qui peut porter un autre substituant,
- Zₐ⁻ représente un contre-ion qui existe dans le cas où il est nécessaire pour neutraliser une charge, le contre-ion étant un ion halogène, un ion tétrafluoroborate, un ion hexafluorophosphate ou un ion sulfonate,
et dans lequel la couche d'enregistrement d'une image contient de plus
- un sel de diaryl iodonium comprenant deux groupements donneurs d'électrons, ou plus, en tant qu'initiateur de polymérisation
- un composé polymérisable, et
- un polymère liant

2. Précurseur de plaque d'impression lithographique selon la revendication 1, dans lequel le groupement soluble dans un solvant, inclus dans le colorant de cyanine, est un groupement éther ou un groupement alkyloxycarbonyle.

3. Précurseur de plaque d'impression lithographique selon la revendication 1, dans lequel le contre-ion du sel de diaryl iodonium est C₄F₉SO₃⁻.

4. Précurseur de plaque d'impression lithographique selon la revendication 1, dans lequel le colorant de cyanine est un composé incluant une structure de sel comprenant un cation et un anion, et au moins l'un parmi l'anion inclus dans le colorant de cyanine et l'anion inclus dans l'initiateur de polymérisation, est un anion inorganique.

5. Précurseur de plaque d'impression lithographique selon l'une quelconque des revendications 1-4, dans lequel la couche d'enregistrement d'une image comprend de plus une microcapsule ou un microgel.

6. Procédé d'impression comprenant : une étape consistant à exposer selon une image le précurseur de plaque d'impression lithographique de la revendication 1, avec un laser à infrarouge, et une étape d'impression en amenant une encre à l'huile et un composant aqueux à réaliser une impression sans effectuer aucun processus de développement du précurseur de plaque d'impression lithographique après exposition, la surface non exposée par le laser à infrarouge du précurseur de plaque d'impression lithographique étant éliminé au cours de l'étape d'impression.
